# EUROPEAN PATENT APPLICATION

(11) **EP 4 187 982 A1**
(43) Date of publication of application: **31.05.2023**
(21) Application number: 21846189.5
(22) Date of filing: 20.07.2021
(51) Int. Cl.: H04W 52/02

(54) **SLEEP INDICATION METHOD AND APPARATUS, TERMINAL, AND NETWORK SIDE DEVICE**

(30) Priority: 23.07.2020 CN 202010718638
(71) Applicant: Vivo Mobile Communication Co., Ltd., Dongguan, Guangdong 523863 (CN)
(72) Inventor: LIU, Siqi, Dongguan, Guangdong 523863 (CN); JI, Zichao, Dongguan, Guangdong 523863 (CN); PAN, Xueming, Dongguan, Guangdong 523863 (CN); LI, Gen, Dongguan, Guangdong 523863 (CN)
(74) Representative: Murgitroyd & Company
(86) International application number: PCT/CN2021/107260
(87) International publication number: WO 2022/017351

(57) **Abstract**

This application discloses a dormancy indication method and apparatus, a terminal, and a network side device, and belongs to the field of wireless communications technologies. The dormancy indication method includes: receiving target control information on a target cell, where the target control information carries dormancy indication information, and the target cell includes a first cell and/or a second cell, where the second cell supports being scheduled by the first cell, or the second cell supports self-scheduling and the second cell supports being scheduled by the first cell; and determining, based on the dormancy indication information, a dormant state of the first cell.

## Description

### CROSS-REFERENCE TO RELATED APPLICATION

The present invention claims priority to Chinese Patent Application No. 202010718638.4, filed with the Chinese Patent Office on July 23, 2020 and entitled "DORMANCY INDICATION METHOD AND APPARATUS, TERMINAL, AND NETWORK SIDE DEVICE", which is incorporated herein by reference in its entirety.

### TECHNICAL FIELD

This application relates to the field of wireless communications technologies, and specifically, to a dormancy indication method and apparatus, a terminal, and a network side device.

### BACKGROUND

A 5-th Generation (5-th Generation, 5G) new radio (New Radio, NR) system supports carrier aggregation (Carrier Aggregation, CA), and may configure and activate multiple component carriers (Component Carrier, CC) or cells for user equipment (User Equipment, UE), and supports cross-carrier scheduling during the CA. In addition, NR also supports a scenario of multiple transmission and reception panels (Multiple Transmission and Reception Panel, M-TRP), and scheduling, transmission, and receiving of data may also be performed by the M-TRPs on the UE. In the current NR system, one cell can only be scheduled by one scheduling cell (that is, supports only self-scheduling or be scheduled by another cell), and a primary cell (Primary Cell, Pcell) can only be scheduled by the primary cell.

In the prior art, to save power consumption, a discontinuous reception (Discontinuous Reception, DRX) mechanism is configured for a terminal. To further achieve power saving under DRX configuration, a downlink control information format 2-6 with a cyclic redundancy check (Cyclic Redundancy Check, CRC) scrambled by a power saving radio network temporary indicator (Power Saving Radio Network Temporary Indicator, PS-RNTI) (DCI format 2-6 with CRC scrambled by PS-RNTI, DCP) may be configured before a DRX period. A wake-up indication (Wake Up indication) field in the DCP is used for indicating whether the UE enables an on duration timer (on duration Timer) of next DRX period, or the DCP indicates whether a media access control (Media Access Control, MAC) layer enables an on duration timer (on duration Timer) of next DRX period. In a case that the timer is enabled, the UE needs to monitor a PDCCH within the timer; otherwise, the UE does not monitor the PDCCH. The DCP can only be configured on the Pcell, and the power saving radio network temporary indicator (Power Saving RNTI, PS-RNTI) is a power-consumption-saving RNTI. The DCI format 2-6 exists outside of an activation time. Currently, the DCP can be configured only when connected DRX (Connected DRX, DRX) is configured.

Currently, for two information fields of the DCI format 2-6:
(1) a wake-up indication (wake-up indication) field, such as 1 bit, is used for indicating whether the UE enables the on duration timer of the next DRX period; and
(2) a secondary cell (Secondary Cell, Scell) dormancy (dormancy) indication information (indication) field (such as 0, 1, 2, 3, 4, or 5 bits) is used for indicating whether an Scell of the UE enters a dormancy behavior during the CA.

In addition, the Scell dormancy indication field in the DCI format 2-6 may be further used for indicating whether an Scell group is switched to a dormant (dormant) bandwidth part (Bandwidth Part, BWP) in a unit of Scell group (group). Each bit in the field correspondingly indicates one Scell group.

To enhance coverage of a control channel, the Pcell is generally deployed on low-frequency-band carriers. On the other hand, bandwidths of the low-frequency-band carriers are insufficient, and most of low-frequency-band carriers have been deployed to other systems (for example, an LTE system). Therefore, a high-frequency-band carrier may be configured as the Scell and the Pcell may be scheduled through the Scell to resolve a problem of limited capacity of the control channel of the Pcell, to reduce overheads of the physical downlink control channel (Physical Downlink Control Channel, PDCCH) on the Pcell.

However, in the prior art, only downlink control information (Downlink Control Indicator, DCI) of the Pcell is supported to perform a dormancy indication. If the Pcell cannot perform the dormancy indication for a specific reason, the objective of power saving cannot be achieved.

### SUMMARY

Objectives of embodiments of this application are to provide a dormancy indication method, which can resolve a problem in which power saving cannot be achieved because a Pcell cannot perform a dormancy indication.

To resolve the above technical problem, this application is implemented as follows:
According to a first aspect, a dormancy indication method is provided, applied to a terminal, the method including: receiving target control information on a target cell, where the target control information carries dormancy indication information, and the target cell includes a first cell and/or a second cell, where the second cell supports being scheduled by the first cell, or the second cell supports self-scheduling and the second cell supports being scheduled by the first cell; and determining a scheduling state of the first cell based on the dormancy indication information.

According to a second aspect, a dormancy indication method is provided, applied to a network side device, the method including: transmitting target control information on a target cell of a terminal, where the target control information carries dormancy indication information, and the target cell includes a first cell and/or a second cell, where the second cell supports being scheduled by the first cell, or the second cell supports self-scheduling and the second cell supports being scheduled by the first cell.

According to a third aspect, a dormancy indication apparatus is provided, including: a receiving module, configured to receive target control information on a target cell, where the target control information carries dormancy indication information, and the target cell includes a first cell and/or a second cell, where the second cell supports being scheduled by the first cell, or the second cell supports self-scheduling and the second cell supports being scheduled by the first cell; and a determining module, configured to determine a scheduling state of the first cell based on the dormancy indication information.

According to a fourth aspect, a dormancy indication apparatus is provided, including: a transmission module, configured to transmit target control information on a target cell of a terminal to the terminal, where the target control information carries dormancy indication information, and the target cell includes a first cell and/or a second cell, where the second cell supports being scheduled by the first cell, or the second cell supports self-scheduling and the second cell supports being scheduled by the first cell.

According to a fifth aspect, a terminal is provided. The terminal includes a processor, a memory, and a program or instruction stored on the memory and executable on the processor, the program or instruction, when executed by the processor, implementing steps of the method according to the first aspect.

According to a sixth aspect, a network side device is provided. The network side device includes a processor, a memory, and a program or instruction stored on the memory and executable on the processor, the program or instruction, when executed by the processor, implementing steps of the method according to the second aspect.

According to a seventh aspect, a readable storage medium is provided. The readable storage medium stores a program or instruction, the program or instruction, when executed by a processor, implementing steps of the method according to the first aspect, or implementing steps of the method according to the second aspect.

According to an eighth aspect, a chip is provided. The chip includes a processor and a communication interface, where the communication interface is coupled to the processor, and the processor is configured to run a program or instruction of a network side device, to implement the method according to the first aspect, or implement the method according to the second aspect.

In the embodiments of this application, target control information is transmitted on a first cell and/or a second cell of a terminal, and the target control information carries dormancy indication information, where the second cell supports being scheduled by the first cell, or the second cell supports self-scheduling and the second cell supports being scheduled by the first cell; and the terminal determines a scheduling state of the first cell based on the dormancy indication information. In this way, when a primary cell cannot perform a dormancy indication for a specific reason, for example, the primary cell is used as being scheduled, another cell sends a dormancy indication to the primary cell, to achieve the objective of power saving.

### BRIEF DESCRIPTION OF THE DRAWINGS

FIG. 1 is a block diagram of a wireless communication system to which the embodiments of this application are applicable;
FIG. 2 is a flowchart of a dormancy indication method according to an embodiment of this application;
FIG. 3 is a schematic structural diagram of a dormancy indication apparatus according to an embodiment of this application;
FIG. 4 is another flowchart of a dormancy indication method according to an embodiment of this application;
FIG. 5 is another schematic structural diagram of a dormancy indication apparatus according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic diagram of a hardware structure of a network side device according to an embodiment of this application.

### DETAILED DESCRIPTION

The following clearly and completely describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application without creative efforts shall fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that the embodiments of this application can be implemented in other orders than the order illustrated or described herein. Objects distinguished by "first" and "second" are usually one type, and the quantity of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in the embodiments of this application are not limited to a Long Term Evolution (Long Term Evolution, LTE) system or an LTE-Advanced (LTE-Advanced, LTE-A) system, and can also be used in other wireless communication systems, such as, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), and Single-carrier Frequency-Division Multiple Access (Single-carrier Frequency-Division Multiple Access, SC-FDMA). The terms "system" and "network" in the embodiments of this application are often used interchangeably, and the described technology can be used not only for the above systems and radio technologies, but also for other systems and radio technologies. However, the following description describes a new radio (New Radio, NR) system for example objectives, and NR terms are used in most of the description below, although these technologies are also applicable to applications other than NR system applications, such as a 6-th generation (6-th Generation, 6G) communication system.

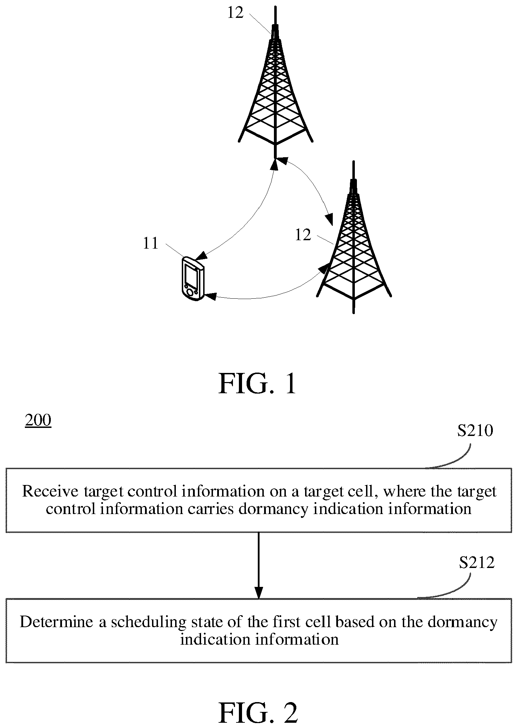

FIG. 1 is a block diagram of a wireless communication system to which the embodiments of this application are applicable. The wireless communication system includes a terminal 11 and a network side device 12. The terminal 11 may also be referred to as a terminal device or user equipment (User Equipment, UE). The terminal 11 may be, for example, a terminal-side device such as a mobile phone, a tablet personal computer (Tablet Personal Computer), a laptop computer (Laptop Computer), a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device), an in-vehicle device (VUE), or a pedestrian terminal (PUE). The wearable device includes: a bracelet, earphones, glasses, or the like. It should be noted that, a specific type of the terminal 11 is not limited in the embodiments of this application. The network side device 12 may be a base station or a core network, where the base station may be referred to as a Node B, an evolved node B, an access point, a base transceiver station (Base Transceiver Station, BTS), a radio base station, a radio transceiver, a basic service set (Basic Service Set, BSS), an extended service set (Extended Service Set, ESS), a node B, an evolved node B (eNB), a home node B, a home evolved node B, a WLAN access point, a WiFi node, a transmitting receiving point (Transmitting Receiving Point, TRP), or another appropriate term in the field, as long as the same technical effect is achieved. The base station is not limited to a specific technical term. It should be noted that, a base station in the NR system is used as an example in the embodiments of this application, but a specific type of the base station is not limited.

A dormancy indication method provided in the embodiments of this application is described below through specific embodiments and application scenarios thereof with reference to the accompanying drawings.

FIG. 2 is a flowchart of a dormancy indication method according to an embodiment of this application. A method 200 may be performed by a terminal. In other words, the method may be performed by software or hardware installed on the terminal. As shown in FIG. 2, the method may include the following steps.

S210. Receive target control information on a target cell, where the target control information carries dormancy indication information, and the target cell includes a first cell and/or a second cell.

In this embodiment of this application, the second cell supports being scheduled by the first cell, or the second cell supports self-scheduling and the second cell supports being scheduled by the first cell. For example, the second cell may be a Pcell, the first cell may be an Scell, the Scell may schedule the Pcell, and the Pcell can schedule itself. Certainly, this is not limited herein. In some cases, the Pcell may not schedule itself. For example, in a case that the Pcell is instructed to be dormant, the Pcell may not schedule itself.

In this embodiment of this application, the target control information carrying the dormancy indication information may be transmitted on the first cell, or may be transmitted on the second cell, or may be transmitted on the first cell and the second cell.

The target control information includes, but is not limited to: at least one of downlink control information (DCI), a MAC control element (Control Element, CE), a PDCCH, RRC signaling, or the like.

In a case that the target control information is DCI, the DCI may be predetermined DCI, for example, DCI with a predetermined format, or DCI with a predetermined type.

S212. Determine a scheduling state of the first cell based on the dormancy indication information.

In this embodiment of this application, the dormancy indication information may indicate whether one or more cells (for example, one or more Scells) of the terminal during CA are dormant.

In this embodiment of this application, a scheduling state of one cell refers to whether the cell is activated or dormant, whether the cell may schedule itself, whether the cell may schedule another cell (including a primary cell or a secondary cell), whether the cell may be scheduled by another cell, and the like.

After receiving the dormancy indication information, the terminal may determine the scheduling state of the first cell, for example, whether the first cell is in a non-dormant state.

That the first cell is in a non-dormant state means that the first cell is in an activated state, or the first cell is in corresponding scheduling, or receiving of a PDCCH of the first cell is maintained, or the like.

That the first cell is in a dormant state means that the first cell is in a deactivated state, or the first cell has no corresponding scheduling, or monitoring and/or receiving of the PDCCH of the first cell are not performed, or the like.

In this embodiment of this application, target control information is transmitted on a first cell and/or a second cell of a terminal, and the target control information carries dormancy indication information, where the second cell supports being scheduled by the first cell, or the second cell supports self-scheduling and the second cell supports being scheduled by the first cell; and the terminal determines a scheduling state of the first cell based on the dormancy indication information. In this way, when a primary cell cannot perform a dormancy indication for a specific reason, for example, the primary cell is used as being scheduled, another cell sends a dormancy indication to the primary cell, to achieve the objective of power saving.

In a possible implementation, in S212, the determining a scheduling state of the first cell based on the dormancy indication information includes: determining, based on the dormancy indication information, that the first cell is in the non-dormant state.

In the above possible implementation, the first cell is in the non-dormant state, so that a situation in which the first cell cannot schedule the second cell due to entering dormancy can be avoided.

In a possible implementation, to enable the first cell to be in the non-dormant state, the first cell may not belong to any cell group. In this way, it can be ensured that the target control information does not include dormancy indication information indicating whether the first cell is dormant, that is, the target control information does not include the dormancy indication information corresponding to the first cell, so as to ensure that the first cell is in the non-dormant state. In addition/alternatively, the first cell is not configured with a dormant BWP. In this way, it can also be ensured that the first cell is in the non-dormant state.

In the above possible implementation, a network side may ensure that the first cell does not belong to any cell group, for example, the network side may not configure the first cell to any cell group when configuring cell groups. In addition/alternatively, the network side may not configure the dormant BWP for the first cell.

For example, assuming that the first cell is an Scell#1, the network side ensures that the Scell#1 does not belong to any Scell group (that is, does not correspond to a dormancy indication), or the network side does not configure a dormant BWP for the Scell#1.

In specific applications, the network side and the terminal may pre-determine that the first cell does not belong to any cell group, or the network side may indicate that the first cell of the terminal does not belong to any cell group. This is not specifically limited in this embodiment.

In another possible implementation, the first cell may also belong to a first cell group and/or the first cell may also be configured with a dormant BWP. In this case, indication information included in the dormancy indication information corresponds to the target cell and/or a target cell group, where the target cell is a cell other than the first cell, and the target cell group is a cell group other than the first cell group. That is, in the possible implementation, the dormancy indication information does not include indication information corresponding to the first cell or the first cell group, that is, the dormancy indication information does not indicate whether the first cell and/or the first cell group are dormant. Through the possible implementation, it can also be ensured that the terminal may determine that the first cell is in the non-dormant state when determining a dormant state of the first cell based on the dormancy indication information.

For example, assuming that the first cell is an Scell#1, the target control information may include one or more bits, and there is a mapping relationship between each bit and one Scell or one Scell group. In the possible implementation, there is a correspondence, for example, a one-by-one correspondence, between each bit and an Scell other than the Scell#1 or between each bit and an Scell group other than an Scell group to which the Scell#1 belongs.

In another example, by using an example in which an Scell scheduling a Pcell is an Scell#1, UE has 5 Scell groups, and an Scell group to which the Scell#1 belongs is an Scell group#0. Therefore, a dormancy indication includes 4 bits corresponding to an Scell group#1/2/3/4 respectively. Alternatively, the UE has 5 Scells, namely, Scell#0/1/2/3/4, and an Scell group to which the Scell#1 belongs is an Scell group#1. Therefore, the dormancy indication includes 4 bits corresponding to an Scell#0/2/3/4 respectively.

Alternatively, in another possible implementation, the first cell belongs to a first cell group, and the dormancy indication information includes target information corresponding to the first cell or the first cell group, where the target information indicates the non-dormant state. That is, the target information corresponding to the first cell or the first cell group in the dormancy indication information always indicates the non-dormant state. By using the possible implementation, in S212, the terminal may determine, according to the dormancy indication information, that the first cell is in the non-dormant state.

For example, assuming that the first cell is an Scell#1, the target control information may include one or more bits, and there is a mapping relationship between each bit and one Scell or one Scell group, in the possible implementation, a value of a bit corresponding to the Scell#1 is 1 (that is, a value corresponding to the non-dormant state), or a value of a bit corresponding to an Scell group to which the Scell#1 belongs is 1 (that is, a value corresponding to being non-dormant).

In another example, by using an example in which an Scell scheduling a Pcell is an Scell#1, UE has 5 Scell groups, a dormancy indication includes 5 bits, and an Scell group to which the Scell#1 belongs is an Scell group#0. Assuming that a bit#0 of the dormancy indication corresponds to the Scell group#0, a value of the bit is fixed to 1 (that is, a value corresponding to being non-dormant). Alternatively, the UE has 5 Scells, namely, Scell#0/1/2/3/4, and the dormancy indication includes 5 bits. Assuming that a bit#1 of the dormancy indication corresponds to the Scell#1, a value of the bit is fixed to 1.

Alternatively, in another possible implementation, in a case that the dormancy indication information includes target information corresponding to the first cell or the first cell group, at least one of the following processing (1) or (2) may be performed when the scheduling state of the first cell is determined based on the dormancy indication information.

### (1) Determine to ignore the target information.

In the possible implementation, the terminal may directly ignore the target information corresponding to the first cell or the first cell group in the dormancy indication information, that is, the terminal always determines that the first cell is in the non-dormant state regardless of whether the target information indicates dormancy.

Optionally, the target information is determined to be ignored in a case that the target information indicates dormancy, and the dormant state of the first cell may be determined according to the indication of the target information in a case that the target information indicates non-dormancy.

That the target information indicates dormancy may mean that the target information corresponding to the first cell in the dormancy indication information indicates dormancy, or may mean that the target information corresponding to the first cell group in the dormancy indication information indicates the dormant state.

For example, assuming that the first cell is an Scell#1, the target control information may include one or more bits, and there is a mapping relationship between each bit and one Scell or one Scell group, in the possible implementation, in a case that a value of a bit corresponding to the Scell#1 or an Scell group to which the Scell#1 belongs indicates dormancy (for example, the bit=0), the indication of the bit is ignored.

In another example, by using an example in which an Scell scheduling a Pcell is an Scell#1, UE has 5 Scell groups, a dormancy indication includes 5 bits, and an Scell group to which the Scell#1 belongs is an Scell group#0. Assuming that a bit#0 of the dormancy indication corresponds to the Scell group#0, the UE ignores the bit when determining a meaning of the dormancy indication. Alternatively, the UE has 5 Scells, namely, Scell#0/1/2/3/4, and the dormancy indication includes 5 bits. Assuming that a bit#1 of the dormancy indication corresponds to the Scell#1, the UE ignores the bit when determining a meaning of the dormancy indication.

### (2) Determine that the target information is valid for cells other than the first cell.

In the possible implementation, the target information is not applied to or is invalid for the first cell. For example, it may be directly determined that the target information is not applied to or is invalid for the first cell, that is, regardless of whether the target information indicates dormancy, the terminal does not apply the target information to the first cell or the first cell group, and determines that the first cell is in the non-dormant state.

Optionally, it may be determined that the target information is invalid for the first cell or the first cell group in a case that the target information indicates dormancy. Further, it may be determined that the target information is valid for the cells other than the first cell. The target information may also be valid for the first cell in a case that the target information indicates non-dormancy.

For example, assuming that the first cell is an Scell#1, the target control information may include one or more bits, and there is a mapping relationship between each bit and one Scell or one Scell group, in the possible implementation, in a case that a value of a bit corresponding to the Scell#1 or an Scell group to which the Scell#1 belongs indicates dormancy (for example, the bit=0), the bit is not applied to or is invalid for the Scell#1, but is applied to or is valid for other Scells. For example, the bit may be valid for other Scells located in the same Scell group as the Scell#1.

In another example, by using an example in which an Scell scheduling a Pcell is an Scell#1, UE has 5 Scell groups, a dormancy indication includes 5 bits, and an Scell group to which the Scell#1 belongs is an Scell group#0. Assuming that a bit#0 of the dormancy indication corresponds to the Scell group#0, if the bit=0, active DL BWPs of other Scells other than the Scell#1 in the Scell group are switched to dormant BWPs, that is, the UE does not monitor PDCCHs on the other Scells other than the Scell#1 in the Scell group.

In a possible implementation, in S212, the determining a dormant state of the first cell based on the dormancy indication information may also include: determining, in a case that the dormancy indication information indicates that the first cell is dormant, that the first cell enters the dormant state, and the first cell cannot schedule any cell. In the possible implementation, in a case that the dormancy indication information indicates that the first cell is dormant, the first cell enters the dormant state. Therefore, the PDCCH of the first cell is no longer used to indicate power control, for example, indicate a slot format indication (Slot Format Indication, SFI) and/or schedule data and/or signals of the first cell or other cells, or in other words, the terminal no longer monitors the PDCCH of the first cell.

That the dormancy indication information indicates that the first cell is dormant may mean that the dormancy indication information directly indicates that the first cell is dormant, or may mean that the dormancy indication information indicates that the first cell group to which the first cell belongs is dormant.

For example, assuming that the first cell is an Scell#1, the target control information may include one or more bits, and there is a mapping relationship between each bit and one Scell or one Scell group, in the possible implementation, when a bit corresponding to the Scell#1 or a bit corresponding to an Scell group to which the Scell#1 belongs indicates dormant, the Scell#1 instructed to be dormant cannot perform any scheduling, that is, the terminal no longer monitors the PDCCH of the Scell#1.

Alternatively, in another possible implementation, in S212, the determining a dormant state of the first cell based on the dormancy indication information may also include: determining, in a case that the dormancy indication information indicates that the first cell is dormant, that the first cell enters the dormant state, and the first cell cannot schedule the second cell. That is, in the possible implementation, when the dormancy indication information indicates that the first cell is dormant, it is determined that the first cell only cannot schedule the second cell, but may schedule itself or schedule another cell according to configuration. In the possible implementation, that the first cell cannot schedule the second cell means that there is, on the first cell, no PDCCH scheduling data and/or a signal of the second cell, and/or no PDCCH performing power control on the second cell and/or indicating an SFI. However, there may be PDCCHs that may schedule other cells, that is, there may be, on the first cell, PDCCHs scheduling data and/or signals of cells other than the second cell. Therefore, the terminal still needs to monitor the PDCCH of the first cell.

For example, assuming that the first cell is an Scell#1 and the second cell is a Pcell, in the possible implementation, when the Scell#1 or an Scell group to which the Scell#1 belongs is instructed to be dormant, the Scell#1 can no longer schedule the Pcell, which is equivalent to deactivating a function of scheduling the Pcell by the Scell#1. In a possible implementation, the target control information may include one or more bits, and there is a mapping relationship between each bit and one Scell or one Scell group.

In the above possible implementation, in a case that the dormancy indication information indicates that the first cell is dormant, the method further includes any one of the following (1) or (2).

### (1) Switch to a dormant BWP of the first cell.

For example, assuming that the first cell is an Scell#1, the second cell is a Pcell, the target control information may include one or more bits, and there is a mapping relationship between each bit and one Scell or one Scell group, in the possible implementation, when the Scell#1 or an Scell group to which the Scell#1 belongs is instructed to be dormant, the Scell#1 can no longer schedule the Pcell, and the terminal switches to the dormant BWP of the Scell#1.

(2) Skip switching to the dormant BWP of the first cell, and/or switch to a BWP of the first cell that cannot be used to schedule the second cell. In this case, the first cell may be configured with the dormant BWP or the first cell may also not be configured with the dormant BWP, that is, because the first cell is not configured with the dormant BWP, the terminal may skip switching to the dormant BWP of the first cell, and/or switch to the BWP of the first cell that cannot be used to schedule the second cell. Alternatively, even though the first cell is configured with the dormant BWP, the terminal may also skip switching to the dormant BWP of the first cell, and/or switch to a BWP of the first cell that cannot be used to schedule a primary cell.

In the above (2), optionally, the terminal may first determine to skip switching to the dormant BWP of the first cell, and further, the terminal may select to switch to the BWP of the first cell that cannot be used to schedule the second cell. Alternatively, the terminal may also directly switch to or skip switching to the dormant BWP of the first cell. Alternatively, the terminal may determine to skip switching to the dormant BWP of the first cell, and whether to switch the BWP and to switch to which BWP is not limited in this embodiment.

For example, assuming that the first cell is an Scell#1, the second cell is a Pcell, the target control information may include one or more bits, and there is a mapping relationship between each bit and one Scell or one Scell group, in the possible implementation, when the Scell#1 or an Scell group to which the Scell#1 belongs is instructed to be dormant, the Scell#1 can no longer schedule the Pcell, and the terminal does not switch to the dormant BWP of the Scell#1 (where the Scell#1 may be configured with the dormant BWP, or may not be configured with the dormant BWP). Optionally, the terminal may switch to a BWP of the Scell#1 that cannot be used to schedule the Pcell, and the BWP may be stipulated in a protocol, or may be configured by the network side.

In a possible implementation, after the receiving target control information on a target cell, the method further includes: determining, in a case that the dormancy indication information indicates that the first cell is non-dormant, that the first cell can schedule the second cell.

For example, assuming that the first cell is an Scell#1, the second cell is a Pcell, the target control information may include one or more bits, and there is a mapping relationship between each bit and one Scell or one Scell group, in the possible implementation, when the Scell#1 or an Scell group to which the Scell#1 belongs is instructed to be non-dormant (for example, a corresponding bit=1), the Scell#1 may schedule the Pcell, which is equivalent to activating a function of scheduling the Pcell by the Scell#1.

In another possible implementation, after the receiving target control information on a target cell, the method may further include: switching to a first target BWP of the first cell in a case that the dormancy indication information indicates that the first cell is non-dormant, where the first target BWP is a non-dormant BWP. The first target BWP may be configured by the network side.

In the above possible implementation, after the switching to a first target BWP of the first cell, the method may further include: determining, in a case that the first target BWP can be used to schedule the second cell, that the first cell can schedule the second cell; and determining, in a case that the first target BWP cannot be used to schedule the second cell, that the first cell cannot schedule the second cell. That is, in the possible implementation, in a case that the first target BWP may be used to schedule the second cell, the first cell may schedule the second cell; and in a case that the first target BWP cannot be used to schedule the second cell, the first cell cannot schedule the second cell.

For example, assuming that the first cell is an Scell#1 and the second cell is a Pcell, in a case that the non-dormant BWP (namely, the first target BWP) that is switched to is a BWP that may be used to schedule the Pcell, the Scell#1 may schedule the Pcell, that is, a function of scheduling the Pcell by the Scell#1 is activated; and in a case that the non-dormant BWP (namely, the first target BWP) that is switched to is a BWP that cannot be used to schedule the Pcell, the Scell#1 cannot schedule the Pcell.

Optionally, the first target BWP is a BWP that can be used to schedule the second cell. For example, when the network side configures the first target BWP, the first target BWP may be configured as a BWP that may be used to schedule the second cell.

Alternatively, in another possible implementation, after the receiving target control information on a target cell, the method further includes: switching to a second target BWP of the first cell in a case that the dormancy indication information indicates that the first cell is non-dormant, where the second target BWP is a BWP that can be used to schedule the second cell. That is, in the optional implementation, in a case that the dormancy indication information indicates that the first cell is non-dormant, the terminal directly switches to a BWP that is configured by the network side and may be used to schedule the second cell.

For example, assuming that the first cell is an Scell#1, the second cell is a Pcell, the target control information may include one or more bits, and there is a mapping relationship between each bit and one Scell or one Scell group, in the possible implementation, when the Scell#1 or an Scell group to which the Scell#1 belongs is instructed to be non-dormant (for example, a corresponding bit=1), the Scell#1 may schedule the Pcell, and the Scell#1 may be switched to a BWP that is configured by a base station and is used to schedule the Pcell.

In this embodiment of this application, optionally, the terminal may further determine relevant behaviors related to the second cell according to content of the dormancy indication information. The following separately describes cases according to the content of the dormancy indication information.

In a possible implementation, after the receiving target control information on a target cell, in a case that the dormancy indication information indicates that the first cell is dormant, the method further includes at least one of the following (1) to (3).

### (1) Determine that the second cell support only self-scheduling.

It should be noted that, in this embodiment of this application, that a cell supports only self-scheduling is for a scheduling capability of the cell. For example, that the second cell supports only self-scheduling means that in a case that the dormancy indication information indicates that the first cell is dormant, a scheduling capability of the second cell is that the second cell can only schedule itself, and cannot be scheduled by another cell.

Optionally, in a case that the dormancy indication information indicates that the first cell is dormant, a dormancy valid time of the first cell may be set within a certain time or after a certain time. Therefore, that the second cell supports only self-scheduling may be valid within a dormancy period of the first cell. Therefore, the determining that the second cell supports only self-scheduling may include: determining, within a first predetermined time or after a second predetermined time after receiving the target control information, that the second cell supports only self-scheduling. The optional implementation is equivalent to temporarily deactivating a function of scheduling the second cell by the first cell. Specific values of the first predetermined time and the second predetermined time may be determined according to a communication system that is actually applied, and are not limited in this embodiment.

(2) Determine, in a case that the target control information is on the first cell, that control information on the second cell can carry the dormancy indication information.

That is, in a case that the target control information is transmitted on the first cell, because the target control information indicates that the first cell is dormant, it is possible that the target control information cannot be transmitted on the first cell in a subsequent time. Therefore, a function of indicating the dormancy indication information by the second cell may be activated, and it may be determined that the control information on the second cell may carry the dormancy indication information.

Optionally, as described above, in a case that the dormancy indication information indicates that the first cell is dormant, the dormancy valid time of the first cell may be set within a certain time or after a certain time. Therefore, the determining that control information on the second cell can carry the dormancy indication information may include: determining, within a third predetermined time (which may be same as or different from the first predetermined time) or after a fourth predetermined time (which may be same as or different from the second predetermined time) after receiving the target control information, that the control information on the second cell can carry the dormancy indication information. The optional implementation is equivalent to temporarily activating a function of indicating the dormancy indication information by the second cell. Specific values of the third predetermined time and the fourth predetermined time may be determined according to a communication system that is actually applied, and are not limited in this embodiment.

(3) Determine, in a case that the target control information is on the second cell, that only the control information on the second cell can carry the dormancy indication information.

Optionally, as described above, in a case that the dormancy indication information indicates that the first cell is dormant, the dormancy valid time of the first cell may be set within a certain time or after a certain time. Therefore, the determining that only the control information on the second cell can carry the dormancy indication information may include: determining, within a fifth predetermined time (which may be same as or different from the first predetermined time) or after a sixth predetermined time (which may be same as or different from the second predetermined time) after receiving the target control information, that only the control information on the second cell can carry the dormancy indication information.

For example, assuming that the first cell is an Scell#1, the second cell is a Pcell, the target control information is DCI, one piece of DCI is transmitted on the Scell#1, and a bit corresponding to the Scell#1 or an Scell group to which the Scell#1 belongs in the DCI indicates 0 (that is, indicates dormant), (after/within a period of time) after the DCI is transmitted, the Pcell supports only self-scheduling, and/or DCI triggering or activating the Pcell may indicate a dormancy indication. For example, after/within a period of time, the DCI on the Pcell may indicate the dormancy indication, that is, in a case that a function of indicating the dormancy indication by the DCI on the Scell#1 is deactivated, a function of indicating the dormancy indication by the DCI on the Pcell is automatically activated.

That is, in a possible implementation of this embodiment of this application, it is allowed that the Scell#1 indicates that the Scell#1 (or the Scell group to which the Scell#1 belongs) is dormant, and in this case, scheduling of the Pcell cannot rely on the Scell#1. Therefore, the Pcell schedules itself.

In another example, assuming that the first cell is an Scell#1, the second cell is a Pcell, the target control information is DCI, one piece of DCI is transmitted on the Pcell, and a bit corresponding to the Scell#1 or an Scell group to which the Scell#1 belongs in the DCI indicates 0 (that is, indicates dormant), within/after a period of time after UE receives the DCI, the Pcell supports only self-scheduling, and/or only the DCI on the Pcell may indicate a dormancy indication. For example, within/after a period of time, the DCI on the Pcell may indicate the dormancy indication, that is, in a case that a function of indicating the dormancy indication by the DCI on the Scell#1 is deactivated, a function of indicating the dormancy indication by the DCI on the Pcell is automatically activated.

That is, in this embodiment of this application, it is allowed that the Pcell indicates that the Scell#1 (or the Scell group to which the Scell#1 belongs) is dormant, and in this case, scheduling of the Pcell cannot rely on the Scell#1. Therefore, the Pcell schedules itself.

In a possible implementation, in a case that the target control information may include one or more bits and there is a mapping relationship between each bit or each group of bits and one cell or one cell group, a corresponding order between each bit or each group of bits and the cell or the cell group may be: from left to right (or vice versa, that is, from right to left); or from low to high (or vice versa, that is, from high to low); or bit indicators (for example, indexes (index)) from small to large (or vice versa, that is, from large to small) respectively corresponding to cells or cell groups whose indicators (for example, index) are from small to large (or vice versa, that is, from large to small). Optionally, a cell or a cell group corresponding to each bit or each group of bits may be one Scell or one Scell group. One group of bits may be explained as one field.

In the above possible implementations, in a case that the target control information on the first cell is DCI, a format of the target control information includes at least one of the following:
(1) A DCI format 1-1 (DCI format 1-1).
(2) A DCI format 0-1 (DCI format 0-1).
(3) A DCI format 2-6 (DCI format 2-6).

In a case that the first cell is configured with a common search space, the DCI format 2-6 may be used. That is, in a case that the DCI format 2-6 is used, it is required that the first cell is configured with the CSS.

In the above possible implementations, in a case that the target control information on the second cell is DCI, a format of the target control information includes at least one of the following (1) to (4).
(1) A DCI format 0-0 (DCI format 0-0). For example, in a case that the second cell still supports non-fallback (non-fallback) DCI in this scenario, the DCI format 0-0 may be used on the second cell to indicate the dormancy indication information.

Optionally, when all bits in a frequency domain resource indication field (FDRA) of the target control information on the second cell are set as a preset value (for example, 0 or 1), the target control information carries the dormancy indication information (dormancy indication).

Optionally, at least part of at least one of the following fields in DCI with the DCI format 0-0 is used for indicating the dormancy indication information:
a) an indication field of a modulation and coding scheme of a transport block 1 (Modulation and coding scheme of transport block 1);
b) an indication field of a new data indicator of the transport block 1 (New data indicator of transport block 1);
c) an indication field of a redundancy version of the transport block 1 (Redundancy version of transport block 1);
d) an indication field of an HARQ process number (HARQ process number);
e) an indication field of an antenna port (Antenna port(s)); or
f) an indication field of DMRS sequence initialization (DMRS sequence initialization).

By using an example in which the first cell is an Scell#1 and the second cell is a Pcell, bits corresponding to the dormancy indication information are ordered from left to right (or vice versa) or from low to high (or vice versa), or indexes of these bits from small to large (or vice versa) respectively correspond to Scells whose indexes are from small to large. Optionally, the above Scells are Scells other than the Scell#1.

(2) A DCI format 1-1 (DCI format 1-1). For example, in a case that the second cell still supports a terminal-specific search space (USS) in this scenario, that is, supports non-fallback DCI, the DCI format 1-1 may be used.

(3) A DCI format 0-1. For example, in a case that the second cell still supports a terminal-specific search space USS in this scenario, that is, supports non-fallback DCI, the DCI format 0-1 may be used.

(4) A DCI format 2-6. For example, in a case that the second cell still supports a common search space (CSS) in this scenario, the DCI format 2-6 may be used.

In the above possible implementation, in a case that the format of the target control information uses the DCI format 0-0, the terminal further sends feedback information after receiving the target control information on the target cell.

Optionally, the feedback information is used for indicating whether the terminal successfully receives the target control information. For example, the terminal sends confirmation (for example, ACK) feedback information in a case that the target control information is successfully received; otherwise, sends NACK. Alternatively, the feedback information is used for indicating that the terminal successfully received the target control information. For example, the terminal sends the confirmation (for example, ACK) feedback information only in a case that the target control information is successfully received.

For example, in a case that DCI at a moment n, for example, the DCI format 0-0, indicates the dormancy indication, the terminal may send feedback information at a moment n+k or within a preset time window after the moment n.

Optionally, the feedback information may be HARQ-ACK, for example, ACK. Alternatively, the feedback information may also be a MAC CE, for example, confirmation (Confirmation) of the MAC CE. The MAC CE include a fixed quantity of '0', and/or a carried logical channel number (LCID) is set to a value from 33 to 51, and optionally, may be 43 or 45, or may be a value not being 43 or 45 from 33 to 51.

Optionally, k is a value stipulated in a protocol, or a value indicated by the DCI format 0-0, or a time of transmission of last piece of physical uplink shared information (PUSCH) from the moment n.

k may be a quantity of symbols, a quantity of slots, a quantity of subframes, or a quantity of frames. k may be represented by a preset subcarrier spacing (SCS), and the preset SCS is an SCS of the DCI format 0-0, or an SCS of a BWP on uplink (UL) of the Pcell, or an SCS of the above PUSCH, or a smallest one between at least two SCSs in these SCSs.

Optionally, n is a slot in which the DCI format 0-0 belongs, or is an end symbol or a start symbol of the DCI format 0-0.

By sending the above feedback information, it can be ensured that the terminal and a network side device have the same understanding of whether the terminal receives the target control information, to prevent the terminal from being unable to accordingly perform dormancy or monitoring according to the dormancy indication of the target control information because the terminal loses the target control information, and prevent the network side device from considering that the terminal receives the target control information and accordingly performing dormancy or monitoring according to the dormancy indication.

In the above possible implementations, optionally, information carried in the target control information includes any one of the following: the dormancy indication information and scheduled resource information; or the dormancy indication information. That is, in the possible implementations, the target control information may carry the dormancy indication information and the scheduled resource information, and may also carry other information (information other than the dormancy indication information and the scheduled resource information). Alternatively, the target control information carries the dormancy indication information but does not carry the scheduled resource information, and may also carry the other information (the information other than the dormancy indication information and the scheduled resource information). The scheduled resource information may be scheduled resource information of the target control information.

Optionally, in a case that the target control information is target control information on the second cell and the second cell is configured with at least one of the following: a common search space, a terminal-specific search space, or specific DCI, the information carried in the target control information includes: the dormancy indication information and the scheduled resource information.

For example, in a case that the second cell supports the common search space and/or supports the terminal-specific search space, the information carried in the target control information includes: the dormancy indication information and the scheduled resource information. That is, in a case that the target control information is the target control information on the second cell and the second cell supports the common search space and/or supports the terminal-specific search space, optionally, the target control information may carry the dormancy indication information and the scheduled resource information.

Alternatively, in a case that the second cell can schedule itself through the specific DCI, the information carried in the target control information includes: the dormancy indication information and the scheduled resource information.

The specific DCI may include: the non-fallback (non-fallback) DCI and/or the DCI with the DCI format 2-6.

In a possible implementation, in a case that the target control information is transmitted on the first cell and the dormancy indication information includes indication information corresponding to the second cell or the second cell group, the control information transmitted on the second cell does not carry the dormancy indication information, where the second cell group is a cell group to which the second cell belongs. That is, in the possible implementation, in a case that the dormancy indication information transmitted on the first cell indicates that the second cell is dormant, a function of indicating the dormancy indication information by the control information on the second cell is deactivated. In the possible implementation, although the control information on the second cell does not indicate the dormancy indication information, the terminal still needs to monitor a control channel on the second cell because the control information on the second cell may also carry other indication information.

For example, assuming that the first cell is an Scell#1 and the second cell is a Pcell, in a case that there is a correspondence between bit(s) in a dormancy indication of DCI on the Scell#1 and the Pcell, that is, the DCI includes indication information indicating whether the Pcell is dormant, a dormancy indication of DCI on the Pcell no longer indicates a function of the dormancy indication (which may be regarded as deactivation, but a PDCCH on the Pcell still needs to be monitored), and only the DCI on the Scell indicates the function of the dormancy indication.

In another possible implementation, in a case that the target control information is transmitted on the second cell and the dormancy indication information includes indication information corresponding to the second cell or the second cell group, it is determined that the control information on the second cell does not carry the dormancy indication information and/or the control information on the first cell carries the dormancy indication information within a predetermined time or after a predetermined time after receiving the target control information, where the second cell belongs to the second cell group. That is, in the possible implementation, within a seventh predetermined time or after an eighth predetermined time after receiving the target control information on the second cell, a function of indicating the dormancy indication information by the control information on the second cell is deactivated, and a function of indicating the dormancy indication information by the control information on the first cell is triggered or activated. The seventh predetermined time and the eighth predetermined time may be preset or configured by the network side, and are not specifically limited in this embodiment of this application.

For example, assuming that the first cell is an Scell#1 and the second cell is a Pcell, in a case that there is a correspondence between bit(s) in a dormancy indication of DCI on the Scell#1 and the Pcell, that is, the DCI includes indication information indicating whether the Pcell is dormant, within a predetermined time or after a predetermined time, a dormancy indication of DCI on the Pcell no longer indicates a function of the dormancy indication (which may be regarded as deactivation, but a PDCCH on the Pcell still needs to be monitored), and a function of indicating the dormancy indication by the DCI on the Scell is triggered or activated.

In the above possible implementation, in a case that the dormancy indication information carried in the target control information indicates that the second cell is dormant, it is determined that the second cell cannot schedule itself, or the second cell cannot schedule any cell. That is, in a case that the second cell is instructed to be dormant, the second cell cannot schedule itself but may schedule another cell, and the second cell is scheduled by the first cell; or the second cell cannot schedule any cell. Specific descriptions may be determined by a communication system that is actually applied, or stipulated in a protocol, and are not limited in this embodiment.

In the above possible implementation, the determining that the second cell cannot schedule itself, or the second cell cannot schedule any cell includes: determining that the second cell cannot schedule itself or the second cell cannot schedule any cell within a ninth predetermined time or after a tenth predetermined time after transmitting the target control information. The ninth predetermined time and the tenth predetermined time may be preset or configured by the network side, and are not specifically limited in this embodiment of this application.

As described above, in this embodiment of this application, the target control information may be transmitted on the first cell, or may be transmitted on the second cell, or may be transmitted on the first cell and the second cell. A specific implementation that is used may be determined according to a target configuration. Therefore, in a possible implementation, before the receiving target control information on a target cell, the method further includes: determining a target configuration of the target control information, where the target configuration includes at least one of the following (1) to (3).

(1) Receive the target control information on the first cell.

Optionally, when the second cell does not support a CSS or cannot be configured with a DCI format 2-6 or the DCI format 2-6 of the second cell is invalid, the target configuration may be used.

Optionally, when the second cell cannot schedule itself through specific non-fallback (non-fallback) DCI (for example, a DCI format 1-1 or a DCI format 0-1), the target configuration may be used.

Optionally, when the second cell does not support the DCI format 2-6 and the specific non-fallback (non-fallback) DCI (for example, the DCI format 1-1 or the DCI format 0-1), the target configuration may be used.

(2) Receive the target control information on the second cell.

Optionally, when the second cell supports the CSS or may be configured with the DCI format 2-6 or the DCI format 2-6 of the second cell is valid, the target configuration may be used.

Optionally, when the second cell supports the non-fallback (non-fallback) DCI (for example, the DCI format 1-1 or the DCI format 0-1), the target configuration may be used. Further, optionally, when the second cell can schedule itself through the specific non-fallback (non-fallback) DCI (for example, the DCI format 1-1 or the DCI format 0-1), the target configuration may be used.

Optionally, when the second cell supports the DCI format 2-6 and the specific non-fallback (non-fallback) DCI (for example, the DCI format 1-1 or the DCI format 0-1), the target configuration may be used.

(3) Receive the target control information on the first cell and the second cell.

In a possible implementation, in different scenarios, by using an example in which the first cell is an Scell#1 and the second cell is a Pcell, in a case that the target control information is predetermined DCI, cases in which formats and/or types of predetermined DCI on the first cell and predetermined DCI on the second cell may be used simultaneously are shown in Table 1.

**Table 1**

| Case | Predetermined DCI on Pcell | Predetermined DCI on Scell#1 |
|---|---|---|
| 1 | None | Non-fallback DCI |
| Pcell has no USS, and does not support DCI format 2-6 | | At least one of DCI format 1-1 or DCI format 0-1 |
| 2 | DCI format 2-6 | Non-fallback DCI |
| Pcell has no USS | | At least one of DCI format 1-1 or DCI format 0-1 |
| 3 | DCI format 0-0 | Non-fallback DCI |
| Pcell has no USS | | At least one of DCI format 1-1 or DCI format 0-1 |
| 4 | DCI format 2-6 | Non-fallback DCI |
| Pcell has no USS | DCI format 0-0 | At least one of DCI format 1-1 or DCI format 0-1 |
| 5 | Non-fallback DCI | Non-fallback DCI |
| Pcell has USS | At least one of DCI format 1-1 or DCI format 0-1 | At least one of DCI format 1-1 or DCI format 0-1 |

In a possible implementation, the determining a target configuration of the target control information may include: determining the target configuration according to configuration information and/or target information, where the target information includes at least one of the following: whether the target control information is configured; a format of the target control information; a type of the target control information; an indication manner of the target control information; or cell information of the target control information.

That is, in the above possible implementation, the target configuration may be determined according to the configuration information and/or the target information.

The configuration information may directly indicate the target configuration of the target control information, or the configuration information may also indirectly indicate the target configuration of the target control information. For example, the configuration information may indicate that the target control information is one or more of the above target configurations, for example, indicates indicators of three types of target configurations. For example, in a case that the above target configuration (2) is configured in the configuration information, the dormancy indication information is indicated by the target control information on the second cell.

Alternatively, the configuration information may also indicate one or more of whether the target cell is configured with the target control information, the format of the target control information (for example, a format of DCI) configured with the target cell, the type of the target control information configured with the target cell, the indication manner of the target control information, or a cell in the target control information. Through the one or more information, the terminal may also determine the target configuration of the target control information. For example, in a case that only the target control information (for example, preset DCI) on the first cell is configured in the configuration information, only the target control information on the first cell may indicate the dormancy indication, that is, the target configuration is the above target configuration (1).

The above configuration information may be configured by the network side, or the network side may also not configure the configuration information. In this case, the terminal may determine the target configuration according to the above target information. For example, in a case that a format of the target control information configured with the first cell is the DCI format 1-1, the terminal may determine that the target configuration is the above target configuration (1).

In a possible implementation, the determining the target configuration according to configuration information and/or target information includes: selecting, in a case that multiple target configurations are determined according to the target information, one target configuration from the multiple target configurations according to at least one of the following: the target information; or priority information of the first cell and/or the second cell. In the possible implementation, when the target configuration is determined, in a case that the configuration information indicates the multiple target configurations, a target configuration corresponding to a cell with a high priority may be selected. For example, in a case that the first cell has a high priority, the above target configuration (1) is used. In another example, the target configuration configured in the configuration information is the above target configurations (1) and (2), and only the first cell is configured with the target control information. Therefore, it is determined that the target configuration is the above target configuration (1).

Alternatively, in another possible implementation, in a case that multiple target configurations are determined according to the target information, one target configuration is selected from the multiple target configurations according to the priority information of the first cell and/or the second cell. For example, both the first cell and the second cell are configured with the target control information, and in a case that the first cell has a high priority, the above target configuration (1) is used.

In the above possible implementation, after the target configuration of the target control information is determined, the target cell transmitting the target control information may be determined according to the target configuration.

In a possible implementation, the network side may alternatively configure the cell information of the target control information. Therefore, in the possible implementation, the method may further include: obtaining the cell information of the target control information, for example, receiving the cell information of the target control information transmitted by the network side.

Optionally, the cell information includes, but is not limited to at least one of the following: a cell type, a cell indicator, or a quantity of cells.

The cell type may include at least one of the following: a primary cell and/or a secondary cell, a scheduling cell and/or a scheduled cell, a cell scheduled by multiple cells and/or a cell scheduled by one cell, or a cell scheduled across carriers and/or a cell that schedules itself. The cell indicator may include: a serving cell index (servingcellindex) and/or a physical cell identifier (Physical Cell Identifier, PCI). The quantity of cells may be one or two (that is, both).

For example, in a case that the cell information is set as a 'Pcell' or the cell information is not configured, it is considered that target control information (for example, preset DCI) on the Pcell may indicate a dormancy indication. In a case that the cell information is configured as an 'Scell' or an 'Scell#1', it is considered that target control information on the Scell#1 may indicate the dormancy indication. In another example, in a case that the cell information is set as 'both' or 'an Scell and an Pcell', the Pcell and an Scell#1 include target control information.

In a possible implementation, in a case that the determined target configuration is the above target configuration (3), the target control information on the first cell and the second cell may indicate the dormancy indication information. Alternatively, in another possible implementation, a cell transmitting the target control information may also be determined according to a priority of the first cell and/or a priority of the second cell, that is, it is determined that the target control information is on the first cell or the second cell according to the priority of the first cell and/or the priority of the second cell. Alternatively, the target control information on the two cells may also indicate the dormancy indication information.

The priority of the first cell and/or the priority of the second cell may be defined in a protocol or indicated by the network side.

For example, the protocol may define or the network side may indicate any one of the following:
(1) The second cell is preferred or the first cell is preferred;
(2) A cell using target control information (for example, the preset DCI) with a type of a group common PDCCH is preferred;
(3) A cell using target control information carrying the scheduled resource information and the dormancy indication information simultaneously is preferred;
(4) A cell configured with the target control information is preferred;
(5) A cell having target control information (for example, the preset DCI) with a small size (that is, the target control information includes a less quantity of bits) is preferred;
(6) A cell including different control information (for example, DCI) for scheduling the second cell with a small size is preferred. For example, in a case that a size of DCI on a Pcell scheduled by an Scell#1 is 3 bits and a size of DCI scheduled by the Pcell is one bit, the Pcell is preferred.

Alternatively, the network side device may also indicate the priority of the first cell and/or the priority of the second cell, for example, the network side device indicates that the second cell is preferred or indicates that the first cell is preferred.

In a possible implementation, the configuration information may further include: indication information indicating that the terminal does not expect that both the first cell and the second cell are configured with the target control information. In this case, in a case that the terminal does not expect to select the above target configuration (3) when determining the target configuration, if the network side configures the above target configuration (1) (or (2)) and the target configuration (3), the terminal selects the above target configuration (1) (or (2)).

In a possible implementation, before the receiving target control information on a target cell, the method may further include: obtaining indication information of the target control information, where the indication information is used for indicating at least one of the following information of the target control information: a format, a type, or carried information content.

For example, when the target control information is preset DCI, a format of the preset DCI may be indicated as at least one of a DCI format 1-1, a DCI format 0-1, a DCI format 2-6, or a DCI format 0-0; and optionally, may be the DCI format 1-1 and/or the DCI format 0-1. Alternatively, a type of the preset DCI may be indicated as Fallback DCI: 0-0, Non-fallback DCI: 1-1/0-1, or DCI: 2-6 carried by a Group common PDCCH; and optionally, may be specific Non-fallback DCI: the DCI format 1-1 and/or the DCI format 0-1. The information content carried in the target control information may be that: control resource information and the dormancy indication information are simultaneously carried, or the control resource information and the dormancy indication information are not simultaneously carried. For details, reference may be made to the above descriptions. Details are not described herein again.

In the above possible implementation, the network side determines whether the dormancy indication appears in the first cell or the second cell, so that the flexibility can be maintained, and overheads can also be reduced by instructing only one cell to indicate the dormancy indication. Alternatively, only DCI 2-6 on the second cell is maintained to indicate the dormancy indication, and 1-1/0-1 for indicating the dormancy indication is on the first cell.

The above indication information may be configured by the network side, or may be stipulated in a protocol, or may be determined by the terminal. This is not specifically limited in this embodiment.

In the above possible implementation, the indication information is further used for indicating that: the terminal does not expect that the format and/or the type of the target control information configured by the first cell is same as the format and/or the type of the target control information configured by the second cell. For example, it is allowed that the Pcell has the DCI format 2-6 to indicate the dormancy indication, and the Scell#1 has the DCI format 1-1 or 0-1 that may indicate the dormancy indication. Alternatively, it is allowed that the Pcell has the DCI format 0-0 to indicate the dormancy indication, and the Scell#1 has non-fallback DCI: the DCI format 1-1 or 0-1 that may indicate the dormancy indication. Alternatively, it is not allowed that both the Pcell and the Scell#1 have the non-fallback DCI: the DCI format 1-1 or 0-1 that may indicate the dormancy indication.

In the above possible implementations, the first cell may be a secondary cell, and the second cell may be a primary cell.

It should be noted that, in the dormancy indication method provided in the embodiments of this application, an execution entity may be a dormancy indication apparatus, or a control module configured to execute the dormancy indication method in the dormancy indication apparatus. In this embodiment of this application, an example in which the dormancy indication apparatus executes the dormancy indication method is used to describe the dormancy indication apparatus provided in the embodiments of this application.

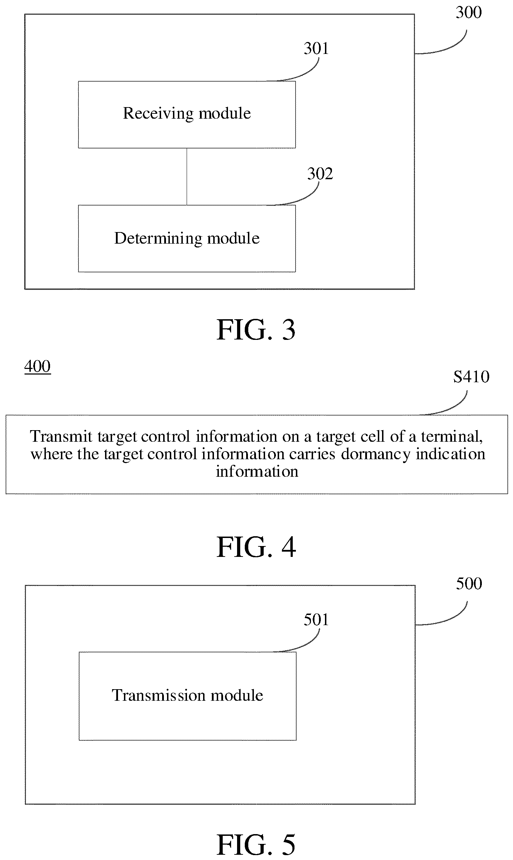

FIG. 3 is a schematic structural diagram of a dormancy indication apparatus according to an embodiment of this application. As shown in FIG. 3, a dormancy indication apparatus 300 may include: a receiving module 301 and a determining module 302. The receiving module 301 is configured to receive target control information on a target cell, where the target control information carries dormancy indication information, and the target cell includes a first cell and/or a second cell, where the second cell supports being scheduled by the first cell, or the second cell supports self-scheduling and the second cell supports being scheduled by the first cell. The determining module is configured to determine a scheduling state of the first cell based on the dormancy indication information.

In a possible implementation, the determining, by the determining module 302, a scheduling state of the first cell based on the dormancy indication information includes: determining, based on the dormancy indication information, that the first cell is in a non-dormant state.

In a possible implementation, the first cell does not belong to any cell group and/or the first cell is not configured with a dormant BWP.

In a possible implementation, the first cell belongs to a first cell group and/or the first cell is configured with a dormant BWP, and indication information included in the dormancy indication information corresponds to the target cell and/or a target cell group, where the target cell is a cell other than the first cell, and the target cell group is a cell group other than the first cell group.

In a possible implementation, the first cell belongs to a first cell group, and the dormancy indication information includes target information corresponding to the first cell or the first cell group, where the target information indicates the non-dormant state.

In a possible implementation, the determining, by the determining module based on the dormancy indication information, that the first cell is in a non-dormant state includes:
determining, in a case that the dormancy indication information includes target information corresponding to the first cell or a first cell group, to ignore the target information, where the first cell group is a cell group to which the first cell belongs; and/or
determining, in a case that the dormancy indication information includes the target information, that the target information is valid for cells other than the first cell.

In a possible implementation, the determining, by the determining module 302, a scheduling state of the first cell based on the dormancy indication information includes that: in a case that the dormancy indication information indicates that the first cell is dormant, the first cell cannot schedule any cell, or the first cell cannot schedule the second cell.

In a possible implementation, in a case that the dormancy indication information indicates that the first cell is dormant, the determining module 302 is further configured to perform any one of the following:
switching to a dormant BWP of the first cell; or
skipping switching to the dormant BWP of the first cell, and/or switching to a BWP of the first cell that cannot be used to schedule the second cell.

In a possible implementation, the determining module 302 is further configured to determine, in a case that the dormancy indication information indicates that the first cell is non-dormant, that the first cell can schedule the second cell.

In a possible implementation, the determining module 302 is further configured to switch to a first target BWP of the first cell in a case that the dormancy indication information indicates that the first cell is non-dormant, where the first target BWP is a non-dormant BWP.

In a possible implementation, after the switching to a first target BWP of the first cell, the determining module 302 is further configured to determine, in a case that the first target BWP can be used to schedule the second cell, that the first cell can schedule the second cell; and determine, in a case that the first target BWP cannot be used to schedule the second cell, that the first cell cannot schedule the second cell.

In a possible implementation, the first target BWP is a BWP that can be used to schedule the second cell.

In a possible implementation, the determining module 302 is further configured to switch to a second target BWP of the first cell in a case that the dormancy indication information indicates that the first cell is non-dormant, where the second target BWP is a BWP that can be used to schedule the second cell.

In a possible implementation, after the receiving target control information on a target cell, in a case that the dormancy indication information indicates that the first cell is dormant, the determining module 302 is further configured to perform at least one of the following:
determining that the second cell supports only self-scheduling;
determining, in a case that the target control information is on the first cell, that control information on the second cell carries the dormancy indication information; or
determining, in a case that the target control information is on the second cell, that only the control information on the second cell carries the dormancy indication information.

In a possible implementation, the determining, by the determining module 302, that the second cell supports only self-scheduling includes: determining, within a first predetermined time or after a second predetermined time after receiving the target control information, that the second cell supports only self-scheduling; and/or the determining that control information on the second cell can carry the dormancy indication information includes: determining, within a third predetermined time or after a fourth predetermined time after receiving the target control information, that the control information on the second cell carries the dormancy indication information; and/or the determining that only the control information on the second cell carries the dormancy indication information includes: determining, within a fifth predetermined time or after a sixth predetermined time after receiving the target control information, that only the control information on the second cell carries the dormancy indication information.

In a possible implementation, the target control information on the first cell is downlink control information DCI, and a format of the target control information includes at least one of the following:
a DCI format 1-1;
a DCI format 0-1; or
a DCI format 2-6, where the first cell is configured with a common search space.

In a possible implementation, the target control information on the second cell is downlink control information DCI, and a format of the target control information includes at least one of the following:
a DCI format 0-0;
a DCI format 1-1;
a DCI format 0-1; or
a DCI format 2-6.

In a possible implementation, the apparatus further includes: a sending module, configured to send, in a case that the format of the target control information is the DCI format 0-0, feedback information of the target control information after receiving the target control information on the target cell, where the feedback information is used for indicating whether the terminal successfully receives the target control information.

In a possible implementation, information carried in the target control information includes any one of the following: the dormancy indication information and scheduled resource information; or the dormancy indication information.

In a possible implementation, in a case that the target control information is target control information on the second cell and the second cell is configured with at least one of the following: a common search space, a terminal-specific search space, or specific DCI, the information carried in the target control information includes: the dormancy indication information and the scheduled resource information.

In a possible implementation, in a case that the target control information is transmitted on the first cell and the dormancy indication information includes indication information corresponding to the second cell or the second cell group, the control information transmitted on the second cell does not carry the dormancy indication information, where the second cell group is a cell group to which the second cell belongs.

In a possible implementation, after receiving the target control information, the determining module 302 is further configured to determine, in a case that the target control information is on the second cell and the dormancy indication information includes indication information corresponding to the second cell or the second cell group, that the control information on the second cell does not carry the dormancy indication information and/or the control information on the first cell carries the dormancy indication information within a seventh predetermined time or after an eighth predetermined time after receiving the target control information, where the second cell belongs to the second cell group.

In a possible implementation, the determining module 302 is further configured to determine, in a case that the dormancy indication information carried in the target control information indicates that the second cell is dormant, that the second cell cannot schedule itself, or the second cell cannot schedule any cell.

In a possible implementation, before the receiving target control information on a target cell, the determining module 302 is further configured to determine a target configuration of the target control information, where the target configuration includes at least one of the following:
transmitting the target control information through the first cell;
transmitting the target control information through the second cell; or
transmitting the target control information through the first cell and the second cell.

In a possible implementation, the determining, by the determining module 302, a target configuration of the target control information includes: determining the target configuration according to configuration information and/or target information, where the target information includes at least one of the following: whether the target control information is configured; a format of the target control information; a type of the target control information; an indication manner of the target control information; or cell information of the target control information.

In a possible implementation, the configuration information indicates the target configuration.

In a possible implementation, the determining, by the determining module 302, the target configuration according to configuration information and/or target information includes: selecting, in a case that multiple target configurations are determined according to the target information, one target configuration from the multiple target configurations according to at least one of the following: the target information; or priority information of the first cell and/or the second cell; or selecting, in a case that multiple target configurations are determined according to the target information, one target configuration from the multiple target configurations according to the priority information of the first cell and/or the second cell.

In a possible implementation, the receiving module 301 is further configured to receive cell information of the target control information configured by a network side.

In a possible implementation, the cell information includes at least one of the following: a cell type, a cell indicator, or a quantity of cells.

In a possible implementation, the configuration information includes: indication information indicating that the terminal does not expect that both the first cell and the second cell are configured with the target control information.

In a possible implementation, before the receiving target control information on a target cell, the receiving module 301 is further configured to obtain indication information of the target control information, where the indication information is used for indicating at least one of the following information of the target control information: a format, a type, or carried information content.

In a possible implementation, the indication information is further used for indicating that: the terminal does not expect that the format and/or the type of the target control information configured by the first cell is same as the format and/or the type of the target control information configured by the second cell.

In a possible implementation, the first cell is a secondary cell, and the second cell is a primary cell.

The dormancy indication apparatus in this embodiment of this application may be an apparatus, or may be a component, an integrated circuit, or a chip in a terminal. The apparatus may be a mobile terminal or a non-mobile terminal. Exemplarily, the mobile terminal may include, but is not limited to the types of the terminal 11 listed above, and the non-mobile terminal may be a server, a network attached memory (Network Attached Storage, NAS), a personal computer (personal computer, PC), a television (television, TV), a teller machine, a self-service machine, or the like. This is not specifically limited in this embodiment of this application.

The dormancy indication apparatus in this embodiment of this application may be an apparatus having an operating system. The operating system may be an android (Android) operating system, may be an ios operating system, and may also be another possible operating system. This is not specifically limited in this embodiment of this application.

The dormancy indication apparatus provided in this embodiment of this application can implement all processes implemented by the method embodiments of FIG. 2, and achieve technical effects. To avoid repetition, details are not described herein again.

FIG. 4 is a flowchart of a dormancy indication method according to an embodiment of this application. A method 400 may be performed by a network side device. In other words, the method may be performed by software or hardware installed on the terminal. As shown in FIG. 4, the method may include the following steps.

S410. Transmit target control information on a target cell of a terminal, where the target control information carries dormancy indication information, and the target cell includes a first cell and/or a second cell, where the second cell supports being scheduled by the first cell, or the second cell supports self-scheduling and the second cell supports being scheduled by the first cell.

The method 400 is a method embodiment of the network side device corresponding to the method 200, and has same possible implementations and effects as related parts in the method 200. Only the possible implementations of the network side device in the method are described herein. For other related content, reference may be made to descriptions in the method 200, and details are not described herein again.

In a possible implementation, the first cell does not belong to any cell group and/or the first cell is not configured with a dormant BWP.

In a possible implementation, the first cell belongs to a first cell group and/or the first cell is configured with a dormant BWP, and indication information included in the dormancy indication information corresponds to the target cell and/or a target cell group, where the target cell is a cell other than the first cell, and the target cell group is a cell group other than the first cell group.

In a possible implementation, the first cell belongs to a first cell group, and the dormancy indication information includes target information corresponding to the first cell or the first cell group,
a value of the target information indicates a non-dormant state; and/or
instructs to ignore the target information; and/or
indicates that the target information is only valid for the cells other than the first cell.

In a possible implementation, in a case that the target information indicates dormancy, the target information is instructed to be ignored; and/or in a case that the target information indicates dormancy, it is indicated that the target information is only valid for the cells other than the first cell.

In a possible implementation, in a case that the dormancy indication information indicates that the first cell is dormant, the first cell enters the dormant state, and the first cell cannot schedule any cell or the first cell cannot schedule the second cell.

In a possible implementation, in a case that the dormancy indication information indicates that the first cell is dormant, the method further includes any one of the following:
switching to a dormant BWP of the first cell; or
skipping switching to the dormant BWP of the first cell, and/or switching to a BWP of the first cell that cannot be used to schedule a primary cell.

In a possible implementation, in a case that the dormancy indication information indicates that the first cell is non-dormant, the first cell can schedule the second cell.

In a possible implementation, after the transmitting target control information on a target cell, the method further includes:
switching to a first target BWP of the first cell in a case that the dormancy indication information indicates that the first cell is non-dormant, where the first target BWP is a non-dormant BWP.

In a possible implementation, after the switching to a target BWP of the first cell, the method further includes:
determining, in a case that the first target BWP can be used to schedule the second cell, that the first cell can schedule the second cell; and
determining, in a case that the first target BWP cannot be used to schedule the second cell, that the first cell cannot schedule the second cell.

In a possible implementation, the first target BWP is a BWP that can be used to schedule the second cell.

In a possible implementation, after the transmitting target control information on a target cell, the method further includes:
switching to a second target BWP of the first cell in a case that the dormancy indication information indicates that the first cell is non-dormant, where the second target BWP is a BWP that can be used to schedule the second cell.

In a possible implementation, after the transmitting target control information on a target cell, in a case that the dormancy indication information indicates that the first cell is dormant, at least one of the following is determined:
the second cell supports only self-scheduling;
in a case that the target control information is transmitted on the first cell, control information on the second cell can carry the dormancy indication information; or
in a case that the target control information is transmitted on the second cell, only the control information on the second cell can carry the dormancy indication information.

In a possible implementation, that the second cell supports only self-scheduling includes that: the second cell supports only self-scheduling within a first predetermined time or after a second predetermined time after transmitting the target control information; and/or
that control information on the second cell can carry the dormancy indication information includes that: the control information on the second cell can carry the dormancy indication information within a third predetermined time or after a fourth predetermined time after transmitting the target control information; and/or
that only the control information on the second cell can carry the dormancy indication information includes that: only the control information on the second cell can carry the dormancy indication information within a fifth predetermined time or after a sixth predetermined time after transmitting the target control information.

In a possible implementation, the target control information transmitted on the first cell is DCI, and a format of the target control information includes at least one of the following:
a DCI format 1-1;
a DCI format 0-1; or
a DCI format 2-6.

In a possible implementation, the target control information transmitted on the second cell is DCI, and a format of the target control information includes at least one of the following:
a DCI format 0-0;
a DCI format 1-1;
a DCI format 0-1; or
a DCI format 2-6.

In a possible implementation, the method further includes: receiving, in a case that the format of the target control information is the DCI format 0-0, feedback information of the target control information after the transmitting target control information on a target cell, where the feedback information is used for indicating whether the terminal successfully receives the target control information.

In a possible implementation, information carried in the target control information includes any one of the following: the dormancy indication information and scheduled resource information; or the dormancy indication information.

In a possible implementation, in a case that the target control information is target control information transmitted on the second cell and the second cell is configured with a common search space, a terminal-specific search space, and specific DCI, the information carried in the target control information includes: the dormancy indication information and the scheduled resource information.

In a possible implementation, in a case that the target control information is transmitted on the first cell and the dormancy indication information includes indication information of the second cell or the second cell group, the control information transmitted on the second cell does not carry the dormancy indication information, where the second cell group is a cell group to which the second cell belongs.

In a possible implementation, after transmitting the target control information, the method further includes: determining, in a case that the target control information is transmitted on the second cell and the dormancy indication information includes indication information corresponding to the second cell or a second cell group, that the control information transmitted on the second cell does not carry the dormancy indication information and/or the control information transmitted on the first cell carries the dormancy indication information within a seventh predetermined time or after an eighth predetermined time after transmitting the target control information, where the second cell belongs to the second cell group.

In a possible implementation, in a case that the dormancy indication information indicates that the second cell is dormant, the second cell cannot schedule itself, or the second cell cannot schedule any cell.

In a possible implementation, the method further includes: indicating a target configuration of the terminal through configuration information and/or target information, where
the target configuration includes at least one of the following:
transmitting the target control information through the first cell;
transmitting the target control information through the second cell; or
transmitting the target control information through the first cell and the second cell, where
the target information includes at least one of the following: whether the target control information is configured; a format of the target control information; a type of the target control information; an indication manner of the target control information; or cell information of the target control information.

In a possible implementation, in a case that multiple target configurations are indicated by the configuration information, the terminal is instructed to select one target configuration from the multiple target configurations through at least one of the following: the target information; or priority information of the first cell and/or the second cell; or in a case that multiple target configurations are indicated by the target information, the terminal is instructed to select one target configuration from the multiple target configurations through the priority information of the first cell and/or the second cell.

In a possible implementation, the method further includes: indicating cell information of the target control information for the terminal.

In a possible implementation, the cell information includes at least one of the following: a cell type, a cell indicator, or a quantity of cells.

In a possible implementation, the configuration information includes: configuring that the first cell has the target control information or configuring that the second cell has the target control information.

In a possible implementation, the method further includes: transmitting, before the transmitting target control information on a target cell, indication information of the target control information to the terminal, where the indication information is used for indicating at least one of the following information of the target control information: a format, a type, or carried information content.

In a possible implementation, the first cell is a secondary cell, and the second cell is a primary cell.

It should be noted that, in the dormancy indication method provided in the embodiments of this application, an execution entity may be a dormancy indication apparatus, or a control module configured to execute the dormancy indication method in the dormancy indication apparatus. In this embodiment of this application, an example in which the dormancy indication apparatus executes the dormancy indication method is used to describe the dormancy indication apparatus provided in the embodiments of this application.

FIG. 5 is another schematic structural diagram of a dormancy indication apparatus according to an embodiment of this application. As shown in FIG. 5, a dormancy indication apparatus 500 may include: a transmission module 501.

The transmission module 501 is configured to transmit target control information on a target cell of a terminal, where the target control information carries dormancy indication information, and the target cell includes a first cell and/or a second cell, where the second cell supports being scheduled by the first cell, or the second cell supports self-scheduling and the second cell supports being scheduled by the first cell.

In a possible implementation, the first cell does not belong to any cell group and/or the first cell is not configured with a dormant BWP.

In a possible implementation, the first cell belongs to a first cell group and/or the first cell is configured with a dormant BWP, and indication information included in the dormancy indication information corresponds to the target cell and/or a target cell group, where the target cell is a cell other than the first cell, and the target cell group is a cell group other than the first cell group.

In a possible implementation, the first cell belongs to a first cell group, and the dormancy indication information includes target information corresponding to the first cell or the first cell group, where a value of the target information indicates a non-dormant state.

In a possible implementation, the determining, based on the dormancy indication information, that the first cell is in a non-dormant state includes:
determining, in a case that the dormancy indication information includes target information corresponding to the first cell or a first cell group, to ignore the target information, where the first cell group is a cell group to which the first cell belongs; and/or
determining, in a case that the dormancy indication information includes the target information, that the target information is valid for cells other than the first cell.

In a possible implementation, in a case that the target information indicates dormancy, the target information is instructed to be ignored; and/or in a case that the target information indicates dormancy, it is indicated that the target information is only valid for the cells other than the first cell.

In a possible implementation, in a case that the dormancy indication information indicates that the first cell is dormant, the first cell enters the dormant state, and the first cell cannot schedule any cell or the first cell cannot schedule the second cell.

In a possible implementation, in a case that the dormancy indication information indicates that the first cell is dormant, the transmission module 501 is further configured to perform any one of the following:
switching to a dormant BWP of the first cell; or
skipping switching to the dormant BWP of the first cell, and/or switching to a BWP of the first cell that cannot be used to schedule a primary cell.

In a possible implementation, in a case that the dormancy indication information indicates that the first cell is non-dormant, the first cell can schedule the second cell.

In a possible implementation, after the transmitting target control information on a target cell, the transmission module 501 is further configured to:
switch to a first target BWP of the first cell in a case that the dormancy indication information indicates that the first cell is non-dormant, where the first target BWP is a non-dormant BWP.

In a possible implementation, after the switching to a target BWP of the first cell, the transmission module 501 is further configured to:
determine, in a case that the first target BWP can be used to schedule the second cell, that the first cell can schedule the second cell; and
determine, in a case that the first target BWP cannot be used to schedule the second cell, that the first cell cannot schedule the second cell.

In a possible implementation, the first target BWP is a BWP that can be used to schedule the second cell.

In a possible implementation, after the transmitting target control information on a target cell, the transmission module 501 is further configured to switch to a second target BWP of the first cell in a case that the dormancy indication information indicates that the first cell is non-dormant, where the second target BWP is a BWP that can be used to schedule the second cell.

In a possible implementation, after the transmitting target control information on a target cell, in a case that the dormancy indication information indicates that the first cell is dormant, the transmission module 501 is further configured to determine at least one of the following:
the second cell supports only self-scheduling;
in a case that the target control information is transmitted on the first cell, control information on the second cell carries the dormancy indication information; or
in a case that the target control information is transmitted on the second cell, only the control information on the second cell carries the dormancy indication information.

In a possible implementation, that the second cell supports only self-scheduling includes that: the second cell supports only self-scheduling within a first predetermined time or after a second predetermined time after transmitting the target control information; and/or
that control information on the second cell can carry the dormancy indication information includes that: the control information on the second cell carries the dormancy indication information within a third predetermined time or after a fourth predetermined time after transmitting the target control information; and/or
that only the control information on the second cell can carry the dormancy indication information includes that: only the control information on the second cell carries the dormancy indication information within a fifth predetermined time or after a sixth predetermined time after transmitting the target control information.

In a possible implementation, the target control information transmitted on the first cell is DCI, and a format of the target control information includes at least one of the following:
a DCI format 1-1;
a DCI format 0-1; or
a DCI format 2-6.

In a possible implementation, the target control information transmitted on the second cell is DCI, and a format of the target control information includes at least one of the following:
a DCI format 0-0;
a DCI format 1-1;
a DCI format 0-1; or
a DCI format 2-6.

In a possible implementation, the transmission module 501 is further configured to: receive, in a case that the format of the target control information is the DCI format 0-0, feedback information of the target control information after the transmitting target control information on a target cell, where the feedback information is used for indicating whether the terminal successfully receives the target control information.

In a possible implementation, information carried in the target control information includes any one of the following: the dormancy indication information and scheduled resource information; or the dormancy indication information.

In a possible implementation, in a case that the target control information is target control information transmitted on the second cell and the second cell is configured with a common search space, a terminal-specific search space, and specific DCI, the information carried in the target control information includes: the dormancy indication information and the scheduled resource information.

In a possible implementation, in a case that the target control information is transmitted on the first cell and the dormancy indication information includes indication information of the second cell or the second cell group, the control information transmitted on the second cell does not carry the dormancy indication information, where the second cell group is a cell group to which the second cell belongs.

In a possible implementation, after transmitting the target control information, the transmission module 501 is further configured to: determine, in a case that the target control information is transmitted on the second cell and the dormancy indication information includes indication information corresponding to the second cell or a second cell group, that the control information transmitted on the second cell does not carry the dormancy indication information and/or the control information transmitted on the first cell carries the dormancy indication information within a seventh predetermined time or after an eighth predetermined time after transmitting the target control information, where the second cell belongs to the second cell group.

In a possible implementation, in a case that the dormancy indication information indicates that the second cell is dormant, the second cell cannot schedule itself, or the second cell cannot schedule any cell.

In a possible implementation, the transmission module 501 is further configured to indicate a target configuration of the terminal through configuration information and/or target information, where
the target configuration includes at least one of the following:
transmitting the target control information through the first cell;
transmitting the target control information through the second cell; or
transmitting the target control information through the first cell and the second cell, where
the target information includes at least one of the following: whether the target control information is configured; a format of the target control information; a type of the target control information; an indication manner of the target control information; or cell information of the target control information.

In a possible implementation, in a case that multiple target configurations are indicated by the configuration information, the terminal is instructed to select one target configuration from the multiple target configurations through at least one of the following: the target information; or priority information of the first cell and/or the second cell; or in a case that multiple target configurations are indicated by the target information, the terminal is instructed to select one target configuration from the multiple target configurations through the priority information of the first cell and/or the second cell.

In a possible implementation, the transmission module 501 is further configured to indicate cell information of the target control information for the terminal.

In a possible implementation, the cell information includes at least one of the following: a cell type, a cell indicator, or a quantity of cells.

In a possible implementation, the configuration information includes: configuring that the first cell has the target control information or configuring that the second cell has the target control information.

In a possible implementation, the transmission module 501 is further configured to transmit, before the transmitting target control information on a target cell, indication information of the target control information to the terminal, where the indication information is used for indicating at least one of the following information of the target control information: a format, a type, or carried information content.

In a possible implementation, the first cell is a secondary cell, and the second cell is a primary cell.

The dormancy indication apparatus in this embodiment of this application may be an apparatus, or may be a component, an integrated circuit, or a chip in a network side device. The apparatus may include, but is not limited to the types of the network side device 12 listed above. This is not specifically limited in this embodiment of this application.

The dormancy indication apparatus in this embodiment of this application may be an apparatus having an operating system. The operating system may be an android (Android) operating system, may be an ios operating system, and may also be another possible operating system. This is not specifically limited in this embodiment of this application.

The dormancy indication apparatus provided in this embodiment of this application can implement all processes implemented by the method embodiments of FIG. 4, and achieve technical effects. To avoid repetition, details are not described herein again.

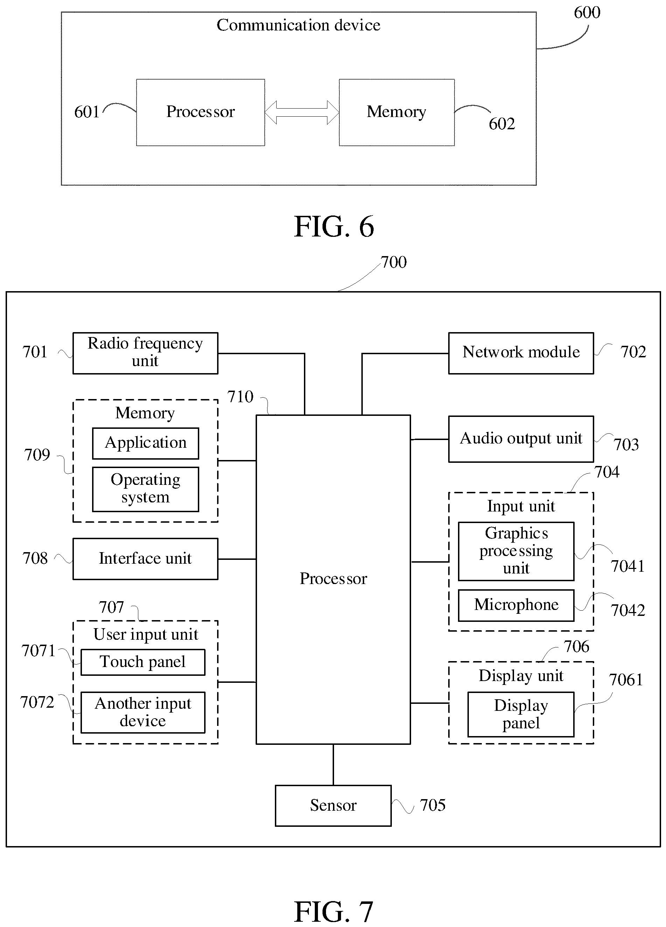

Optionally, as shown in FIG. 6, an embodiment of this application further provides a communication device 600, including a processor 601, a memory 602, and a program or instruction stored on the memory 602 and executable on the processor 601. For example, when the communication device 600 is a terminal, the program or instruction, when executed by the processor 601, implements all processes of the embodiments of the above dormancy indication method shown in FIG. 2, and can achieve the same technical effects. When the communication device 600 is a network side device, the program or instruction, when executed by the processor 601, implements all processes of the embodiments of the above dormancy indication method shown in FIG. 4, and can achieve the same technical effects. To avoid repetition, details are not described herein again.

FIG. 7 is a schematic diagram of a hardware structure of a terminal that implements the embodiments of this application.

A terminal 700 includes, but is not limited to, components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 further includes a power supply (such as a battery) for supplying power to the components. The power supply may logically connect to the processor 710 by using a power supply management system, thereby implementing functions, such as charging, discharging, and power consumption management, by using the power supply management system. A terminal structure shown in FIG. 7 does not constitute a limitation to the terminal, and the terminal may include more or fewer components than those shown in the figure, or some components may be combined, or a different component deployment may be used. Details are not described herein again.

It should be understood that, in this embodiment of this application, the input unit 704 may include a graphics processing unit (Graphics Processing Unit, GPU) 7041 and a microphone 7042. The graphics processing unit 7041 performs processing on image data of a static picture or a video that is obtained by an image acquisition apparatus (for example, a camera) in a video acquisition mode or an image acquisition mode. The display unit 706 may include a display panel 7061, for example, the display panel 7061 may be configured in a form such as a liquid crystal display or an organic light-emitting diode. The user input unit 707 includes a touch panel 7071 and another input device 7072. The touch panel 7071 is also referred to as a touch screen. The touch panel 7071 may include two parts: a touch detection apparatus and a touch controller. The another input device 7072 may include, but is not limited to, a physical keyboard, a functional key (for example, a volume control key or a switch key), a track ball, a mouse, and a joystick, and the details will not be described herein again.

In this embodiment of this application, the radio frequency unit 701 receives downlink data from a network side device and sends downlink data to the processor 710 for processing. In addition, the radio frequency unit sends uplink data to the network side device. Generally, the radio frequency unit 701 includes, but is not limited to, an antenna, at least one amplifier, a transceiver, a coupler, a low noise amplifier, a duplexer, and the like.

The memory 709 may be configured to store a software program or instruction and various data. The memory 709 may mainly include a program or instruction storage region and a data storage region. The program or instruction storage region may store an operating system, an application program or instruction required by at least one function (for example, a sound playback function and an image playback function), or the like. The memory 709 may include a high speed random access memory, and may also include a non-volatile memory. The nonvolatile memory may be a read-only memory (read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash memory device, or other volatile solid-state storage devices.

The processor 710 may include one or more processing units. Optionally, the processor 710 may integrate an application processor and a modem. The application processor mainly processes an operating system, a user interface, an application program or instruction, and the like. The modem mainly processes wireless communication, such as a baseband processor. It may be understood that the foregoing modem may not be integrated into the processor 710.

The radio frequency unit 701 is configured to receive target control information on a target cell, where the target control information carries dormancy indication information, and the target cell includes a first cell and/or a second cell, where the second cell supports being scheduled by the first cell, or the second cell supports self-scheduling and the second cell supports being scheduled by the first cell.

The processor 710 is configured to determine a scheduling state of the first cell based on the dormancy indication information.

Through the above terminal, target control information is transmitted on a first cell and/or a second cell of a terminal, and the target control information carries dormancy indication information, where the second cell supports being scheduled by the first cell, or the second cell supports self-scheduling and the second cell supports being scheduled by the first cell; and the terminal determines a scheduling state of the first cell based on the dormancy indication information. In this way, when a primary cell cannot perform a dormancy indication for a specific reason, for example, the primary cell is used as being scheduled, another cell sends a dormancy indication to the primary cell, to achieve the objective of power saving.

Optionally, the processor 710 is further configured to determine, based on the dormancy indication information, that the first cell is in a non-dormant state.

Optionally, the processor 710 is further configured to determine, in a case that the dormancy indication information indicates that the first cell is dormant, that the first cell enters the dormant state, and the first cell cannot schedule any cell or the first cell cannot schedule the second cell.

Optionally, the processor 710 is further configured to perform any one of the following in a case that the dormancy indication information indicates that the first cell is dormant:
switching to a dormant BWP of the first cell; or
skipping switching to the dormant BWP of the first cell, and/or switching to a BWP of the first cell that cannot be used to schedule the second cell.

Optionally, the processor 710 is further configured to determine, in a case that the dormancy indication information indicates that the first cell is non-dormant, that the first cell can schedule the second cell.

Optionally, the processor 710 is further configured to switch to a first target BWP of the first cell in a case that the dormancy indication information indicates that the first cell is non-dormant, where the first target BWP is a non-dormant BWP.

Optionally, the processor 710 is further configured to determine, in a case that the first target BWP can be used to schedule the second cell, that the first cell can schedule the second cell; and determine, in a case that the first target BWP cannot be used to schedule the second cell, that the first cell cannot schedule the second cell.

Optionally, the processor 710 is further configured to perform at least one of the following in a case that the dormancy indication information indicates that the first cell is dormant:
determining that the second cell supports only self-scheduling;
determining, in a case that the target control information is on the first cell, that control information on the second cell can carry the dormancy indication information; or
determining, in a case that the target control information is on the second cell, that only the control information on the second cell can carry the dormancy indication information;

Optionally, the processor 710 is further configured to perform at least one of the following:
the determining that the second cell supports only self-scheduling includes: determining, within a first predetermined time or after a second predetermined time after receiving the target control information, that the second cell supports only self-scheduling; and/or
the determining that control information on the second cell can carry the dormancy indication information includes: determining, within a third predetermined time or after a fourth predetermined time after receiving the target control information, that the control information on the second cell can carry the dormancy indication information; and/or
the determining that only the control information on the second cell carries the dormancy indication information includes: determining, within a fifth predetermined time or after a sixth predetermined time after receiving the target control information, that only the control information on the second cell carries the dormancy indication information.

Optionally, the processor 710 is further configured to:
determine, in a case that the target control information is on the second cell and the dormancy indication information includes indication information corresponding to the second cell or the second cell group, that the control information on the second cell does not carry the dormancy indication information and/or the control information on the first cell carries the dormancy indication information within a seventh predetermined time or after an eighth predetermined time after receiving the target control information, where the second cell belongs to the second cell group.

Optionally, the processor 710 is further configured to:
determine, in a case that the dormancy indication information carried in the target control information indicates that the second cell is dormant, that the second cell cannot schedule itself, or the second cell cannot schedule any cell.

Optionally, the processor 710 is further configured to:
determine a target configuration of the target control information, where the target configuration includes at least one of the following:
transmitting the target control information through the first cell;
transmitting the target control information through the second cell; or
transmitting the target control information through the first cell and the second cell.

Optionally, the processor 710 is further configured to:
obtain cell information of the target control information, where the cell information includes at least one of the following: a cell type, a cell indicator, or a quantity of cells.

Optionally, the processor 710 is further configured to:
obtain indication information of the target control information, where the indication information is used for indicating at least one of the following information of the target control information: a format, a type, or carried information content.

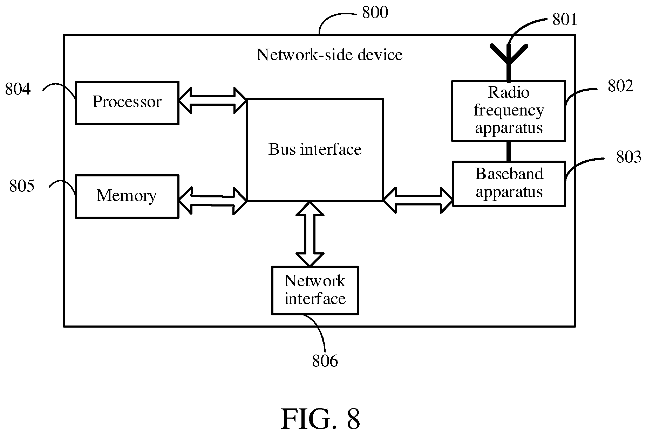

Specifically, an embodiment of this application further provides a network side device. As shown in FIG. 8, a network device 8000 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes information that is to be sent, and sends the information to the radio frequency apparatus 802. The radio frequency apparatus 802 processes the received information and sends the information by using the antenna 801.

A frequency band processing apparatus may be located in the baseband apparatus 803, so that the method executed by the network side device in the above embodiments can be implemented in the baseband apparatus 803. The baseband apparatus 803 includes a processor 804 and a memory 805.

The baseband apparatus 803 may include, for example, at least one baseband plate. Multiple chips are disposed on the baseband plate. As shown in FIG. 8, one of the multiple chips is, for example, the processor 804, and is connected to the memory 805, to invoke a program in the memory 805 to perform operations of the network side device in the above method embodiments.

The baseband apparatus 803 may further include a network interface 806, configured to exchange information with the radio frequency apparatus 802. The interface is, for example, a common public radio interface (common public radio interface, CPRI for short).

Specifically, the network side device in this embodiment of the present invention further includes: an instruction or program stored in the memory 805 and executable on the processor 804, and the processor 804 invokes the instruction or program stored in the memory 805 to perform the method executed by various modules shown in FIG. 5, and can also achieve the same technical effects. To avoid repetition, details are not described herein again.

An embodiment of this application further provides a readable storage medium, storing a program or instruction. The program or instruction, when executed by a processor, implements all processes of the embodiments of the above dormancy indication method, and can achieve the same technical effects. To avoid repetition, details are not described herein again.

The processor is the processor in the terminal in the above embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, including: a processor and a communication interface, where the communication interface is coupled to the processor, and the processor is configured to run a program or instruction of a network side device, to implement all processes of the embodiments of the above dormancy indication method, and can achieve the same technical effects. To avoid repetition, details are not described herein again.

It should be understood that, the chip mentioned in this embodiment of this application may also be referred to as a system-level chip, a system chip, a chip system, a system on chip, or the like.

It should be noted that, the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses. In addition, it should be noted that the scope of the methods and apparatuses in the implementations of this application is not limited to performing the functions in the order shown or discussed, but may also include performing, according to involved functions, the functions basically simultaneously or in a reverse order. For example, the described methods may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the existing technologies may be implemented in the form of a software product. The computer software product is stored in a storage medium (for example, a read-only memory (ROM)/random access memory (RAM), a magnetic disk or an optical disc), and includes several instructions for instructing a terminal (which may be a mobile phone, a computer, a server, an air conditioner, a network device, or the like) to perform the method described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A dormancy indication method, applied to a terminal and comprising:
receiving target control information on a target cell, wherein the target control information carries dormancy indication information, and the target cell comprises a first cell and/or a second cell, wherein the second cell supports being scheduled by the first cell, or the second cell supports self-scheduling and the second cell supports being scheduled by the first cell; and
determining a scheduling state of the first cell based on the dormancy indication information.

2. The method according to claim 1, wherein the determining the scheduling state of the first cell based on the dormancy indication information comprises:
determining, based on the dormancy indication information, that the first cell is in a non-dormant state.

3. The method according to claim 2, wherein the first cell does not belong to any cell group and/or the first cell is not configured with a dormant bandwidth part BWP.

4. The method according to claim 2, wherein the first cell belongs to a first cell group and/or the first cell is configured with a dormant BWP, and indication information comprised in the dormancy indication information corresponds to a target cell and/or a target cell group, wherein the target cell is a cell other than the first cell, and the target cell group is a cell group other than the first cell group.

5. The method according to claim 2, wherein
the first cell belongs to a first cell group, and the dormancy indication information comprises target information corresponding to the first cell or the first cell group, wherein the target information indicates the non-dormant state.

6. The method according to claim 2, wherein the determining, based on the dormancy indication information, that the first cell is in the non-dormant state comprises:
determining, in a case that the dormancy indication information comprises target information corresponding to the first cell or a first cell group, to ignore the target information, wherein the first cell group is a cell group to which the first cell belongs; and/or
determining, in a case that the dormancy indication information comprises the target information, that the target information is valid for cells other than the first cell.

7. The method according to claim 1, wherein the determining the scheduling state of the first cell based on the dormancy indication information comprises that:
in a case that the dormancy indication information indicates that the first cell is dormant, the first cell cannot schedule any cell, or the first cell cannot schedule the second cell.

8. The method according to claim 1, wherein in a case that the dormancy indication information indicates that the first cell is dormant, the method further comprises any one of following:
switching to a dormant BWP of the first cell; or
skipping switching to the dormant BWP of the first cell, and/or switching to a BWP of the first cell that cannot be used to schedule the second cell.

9. The method according to claim 1, wherein after the receiving the target control information on the target cell, the method further comprises:
determining, in a case that the dormancy indication information indicates that the first cell is non-dormant, that the first cell can schedule the second cell.

10. The method according to claim 1, wherein after the receiving the target control information on the target cell, the method further comprises:
switching to a first target BWP of the first cell in a case that the dormancy indication information indicates that the first cell is non-dormant, wherein the first target BWP is a non-dormant BWP.

11. The method according to claim 10, wherein after the switching to the first target BWP of the first cell, the method further comprises:
determining, in a case that the first target BWP can be used to schedule the second cell, that the first cell can schedule the second cell; and
determining, in a case that the first target BWP cannot be used to schedule the second cell, that the first cell cannot schedule the second cell.

12. The method according to claim 10, wherein the first target BWP is a BWP that can be used to schedule the second cell.

13. The method according to claim 1, wherein after the receiving the target control information on the target cell, the method further comprises:
switching to a second target BWP of the first cell in a case that the dormancy indication information indicates that the first cell is non-dormant, wherein the second target BWP is a BWP that can be used to schedule the second cell.

14. The method according to claim 1, wherein after the receiving the target control information on the target cell, in a case that the dormancy indication information indicates that the first cell is dormant, the method further comprises at least one of following:
determining that the second cell supports only self-scheduling;
determining, in a case that the target control information is on the first cell, that control information on the second cell can carry the dormancy indication information; or
determining, in a case that the target control information is on the second cell, that only the control information on the second cell can carry the dormancy indication information.

15. The method according to claim 14, wherein
the determining that the second cell supports only self-scheduling comprises: determining, within a first predetermined time or after a second predetermined time after receiving the target control information, that the second cell supports only self-scheduling; and/or
the determining that the control information on the second cell can carry the dormancy indication information comprises: determining, within a third predetermined time or after a fourth predetermined time after receiving the target control information, that the control information on the second cell can carry the dormancy indication information; and/or
the determining that only the control information on the second cell can carry the dormancy indication information comprises: determining, within a fifth predetermined time or after a sixth predetermined time after receiving the target control information, that only the control information on the second cell can carry the dormancy indication information.

16. The method according to any one of claims 1 to 15, wherein the target control information on the first cell is downlink control information DCI, and a format of the target control information comprises at least one of following:
a DCI format 1-1;
a DCI format 0-1; or
a DCI format 2-6.

17. The method according to any one of claims 1 to 15, wherein the target control information on the second cell is downlink control information DCI, and a format of the target control information comprises at least one of following:
a DCI format 0-0;
a DCI format 1-1;
a DCI format 0-1; or
a DCI format 2-6.

18. The method according to claim 17, further comprising:
sending, in a case that the format of the target control information is the DCI format 0-0, feedback information after obtaining the target control information on the target cell.

19. The method according to claim 18, wherein
the feedback information is used for indicating whether the terminal successfully receives the target control information; or
the feedback information is used for indicating that the terminal successfully received the target control information.

20. The method according to any one of claims 1 to 15, wherein information carried in the target control information further comprises: scheduled resource information.

21. The method according to claim 20, wherein in a case that the target control information is target control information on the second cell and the second cell is configured with at least one of following: a common search space, a terminal-specific search space, or specific DCI, the information carried in the target control information comprises: the dormancy indication information and the scheduled resource information.

22. The method according to any one of claims 1 to 15, wherein in a case that the target control information is transmitted on the first cell and the dormancy indication information comprises indication information corresponding to the second cell or the second cell group, the control information transmitted on the second cell does not carry the dormancy indication information, wherein the second cell group is a cell group to which the second cell belongs.

23. The method according to any one of claims 1 to 15, wherein after receiving the target control information, the method further comprises:
determining, in a case that the target control information is on the second cell and the dormancy indication information comprises indication information corresponding to the second cell or the second cell group, that the control information on the second cell does not carry the dormancy indication information and/or the control information on the first cell carries the dormancy indication information within a seventh predetermined time or after an eighth predetermined time after receiving the target control information, wherein the second cell belongs to the second cell group.

24. The method according to any one of claims 1 to 15, further comprising:
determining, in a case that the dormancy indication information carried in the target control information indicates that the second cell is dormant, that the second cell cannot schedule itself, or the second cell cannot schedule any cell.

25. The method according to any one of claims 1 to 15, wherein before the receiving the target control information on the target cell, the method further comprises:
determining a target configuration of the target control information, wherein the target configuration comprises at least one of following:
transmitting the target control information through the first cell;
transmitting the target control information through the second cell; or
transmitting the target control information through the first cell and the second cell.

26. The method according to claim 25, wherein the determining a target configuration of the target control information comprises:
determining the target configuration according to configuration information and/or target information, wherein the target information comprises at least one of following: whether the target control information is configured; a format of the target control information; a type of the target control information; an indication manner of the target control information; or cell information of the target control information.

27. The method according to claim 25, wherein the determining the target configuration according to the configuration information and/or the target information comprises:
selecting, in a case that multiple target configurations are determined according to the configuration information, one target configuration from the multiple target configurations according to at least one of following: the target information; or priority information of the first cell and/or the second cell; or
selecting, in a case that multiple target configurations are determined according to the target information, one target configuration from the multiple target configurations according to the priority information of the first cell and/or the second cell.

28. The method according to claim 25, further comprising: obtaining cell information of the target control information, wherein the cell information comprises at least one of following: a cell type, a cell indicator, or a quantity of cells.

29. The method according to claim 25, wherein the configuration information comprises: indication information indicating that the terminal does not expect that both the first cell and the second cell are configured with the target control information.

30. The method according to any one of claims 1 to 15, wherein before the receiving the target control information on the target cell, the method further comprises:
obtaining indication information of the target control information, wherein the indication information is used for indicating at least one of following information of the target control information: a format, a type, or carried information content.

31. The method according to claim 30, wherein the indication information is further used for indicating that: the terminal does not expect that a format and/or a type of the target control information configured by the first cell is same as a format and/or a type of the target control information configured by the second cell.

32. The method according to any one of claims 1 to 15, wherein the first cell is a secondary cell, and the second cell is a primary cell.

33. A dormancy indication method, applied to a network side device and comprising:
transmitting target control information on a target cell of a terminal, wherein the target control information carries dormancy indication information, and the target cell comprises a first cell and/or a second cell, wherein the second cell supports being scheduled by the first cell, or the second cell supports self-scheduling and the second cell supports being scheduled by the first cell.

34. The method according to claim 33, wherein the first cell does not belong to any cell group and/or the first cell is not configured with a dormant BWP.

35. The method according to claim 33, wherein the first cell belongs to a first cell group and/or the first cell is configured with a dormant BWP, and indication information comprised in the dormancy indication information corresponds to a target cell and/or a target cell group, wherein the target cell is a cell other than the first cell, and the target cell group is a cell group other than the first cell group.

36. The method according to claim 33, wherein the first cell belongs to a first cell group, and the dormancy indication information comprises target information corresponding to the first cell or the first cell group, wherein a value of the target information indicates a non-dormant state.

37. The method according to claim 33, wherein in a case that the dormancy indication information indicates that the first cell is dormant, the first cell cannot schedule any cell, or the first cell cannot schedule the second cell.

38. The method according to claim 37, wherein in a case that the dormancy indication information indicates that the first cell is dormant, the method further comprises any one of following:
switching to a dormant BWP of the first cell; or
skipping switching to the dormant BWP of the first cell, and/or switching to a BWP of the first cell that cannot be used to schedule a primary cell.

39. The method according to claim 33, wherein after the transmitting target control information on a target cell, the method further comprises:
switching to a first target BWP of the first cell in a case that the dormancy indication information indicates that the first cell is non-dormant, wherein the first target BWP is a non-dormant BWP.

40. The method according to claim 39, wherein the first target BWP is a BWP that can be used to schedule the second cell.

41. The method according to claim 33, wherein after the transmitting the target control information on the target cell, the method further comprises:
switching to a second target BWP of the first cell in a case that the dormancy indication information indicates that the first cell is non-dormant, wherein the second target BWP is a BWP that can be used to schedule the second cell.

42. The method according to claim 33, wherein after the transmitting the target control information on the target cell, in a case that the dormancy indication information indicates that the first cell is dormant, at least one of following is determined:
the second cell supports only self-scheduling;
in a case that the target control information is transmitted on the first cell, control information on the second cell can carry the dormancy indication information; or
in a case that the target control information is transmitted on the second cell, only the control information on the second cell can carry the dormancy indication information.

43. The method according to claim 42, wherein
that the second cell supports only self-scheduling comprises that: the second cell supports only self-scheduling within a first predetermined time or after a second predetermined time after transmitting the target control information; and/or
that control information on the second cell can carry the dormancy indication information comprises that: the control information on the second cell carries the dormancy indication information within a third predetermined time or after a fourth predetermined time after transmitting the target control information; and/or
that only control information on the second cell can carry the dormancy indication information comprises that: only the control information on the second cell carries the dormancy indication information within a fifth predetermined time or after a sixth predetermined time after transmitting the target control information.

44. The method according to any one of claims 33 to 43, wherein in a case that the target control information is transmitted on the first cell and the dormancy indication information comprises indication information of the second cell or the second cell group, the control information transmitted on the second cell does not carry the dormancy indication information, wherein the second cell group is a cell group to which the second cell belongs.

45. The method according to any one of claims 33 to 43, wherein after transmitting the target control information, the method further comprises: determining, in a case that the target control information is transmitted on the second cell and the dormancy indication information comprises indication information corresponding to the second cell or a second cell group, that the control information transmitted on the second cell does not carry the dormancy indication information and/or the control information transmitted on the first cell carries the dormancy indication information within a seventh predetermined time or after an eighth predetermined time after transmitting the target control information, wherein the second cell belongs to the second cell group.

46. The method according to any one of claims 33 to 43, wherein in a case that the dormancy indication information indicates that the second cell is dormant, the second cell cannot schedule itself, or the second cell cannot schedule any cell.

47. The method according to any one of claims 33 to 43, further comprising: indicating a target configuration of the terminal through configuration information and/or target information, wherein
the target configuration comprises at least one of following:
transmitting the target control information through the first cell;
transmitting the target control information through the second cell; or
transmitting the target control information through the first cell and the second cell, wherein
the target information comprises at least one of the following: whether the target control information is configured; a format of the target control information; a type of the target control information; an indication manner of the target control information; or cell information of the target control information.

48. The method according to claim 47, wherein
instructing, in a case that multiple target configurations are indicated by the configuration information, the terminal to select one target configuration from the multiple target configurations through at least one of following: the target information; or priority information of the first cell and/or the second cell; or
instructing, in a case that multiple target configurations are indicated by the target information, the terminal to select one target configuration from the multiple target configurations through the priority information of the first cell and/or the second cell.

49. The method according to any one of claims 33 to 43, wherein before the transmitting target control information on a target cell, the method further comprises:
transmitting indication information of the target control information to the terminal, wherein the indication information is used for indicating at least one of the following information of the target control information: a format, a type, or carried information content.

50. A dormancy indication apparatus, comprising:
a receiving module, configured to receive target control information on a target cell, wherein the target control information carries dormancy indication information, and the target cell comprises a first cell and/or a second cell, wherein the second cell supports being scheduled by the first cell, or the second cell supports self-scheduling and the second cell supports being scheduled by the first cell; and
a determining module, configured to determine a scheduling state of the first cell based on the dormancy indication information.

51. A dormancy indication apparatus, comprising:
a transmission module, configured to transmit target control information on a target cell of a terminal to the terminal, wherein the target control information carries dormancy indication information, and the target cell comprises a first cell and/or a second cell, wherein
the second cell supports being scheduled by the first cell, or the second cell supports self-scheduling and the second cell supports being scheduled by the first cell.

52. A terminal, comprising a processor, a memory, and a program or instruction stored on the memory and executable on the processor, the program or instruction, when executed by the processor, implementing steps of the dormancy indication method according to any one of claims 1 to 32.

53. A network side device, comprising a processor, a memory, and a program or instruction stored on the memory and executable on the processor, the program or instruction, when executed by the processor, implementing steps of the dormancy indication method according to any one of claims 33 to 49.

54. A readable storage medium, storing a program or instruction, the program or instruction, when executed by a processor, implementing steps of the dormancy indication method according to any one of claims 1 to 32, or implementing steps of the dormancy indication method according to any one of claims 33 to 49.
